(19) Europäisches Patentamt / European Patent Office / Office européen des brevets

(11) **EP 4 340 640 B1**

(12) **EUROPEAN PATENT SPECIFICATION**

(45) Date of publication and mention
of the grant of the patent:
**04.02.2026 Bulletin 2026/06**

(21) Application number: **22729677.9**

(22) Date of filing: **19.05.2022**

(51) International Patent Classification (IPC):
*A23L 33/105* (2016.01)  *A23L 33/19* (2016.01)
*A23L 33/00* (2016.01)

(52) Cooperative Patent Classification (CPC):
(C-Sets available)
**A23L 33/19; A23L 33/105; A23L 33/40;**
A23V 2002/00                              (Cont.)

(86) International application number:
**PCT/EP2022/063646**

(87) International publication number:
**WO 2022/243479 (24.11.2022 Gazette 2022/47)**

(54) **HIGH PROTEIN, MICELLAR CASEIN-CONTAINING NUTRITIONAL LIQUIDS ENRICHED WITH CATECHIN-COMPOUNDS AND METHOD OF PRODUCTION**

FLÜSSIGE UND PROTEINREICHE NAHRUNGSMITTELN ENTHALTEND MIZELLAREM CASEIN ANGEREICHERT MIT CATECHINVERBINDUNGEN UND VERFAHREN ZUR HERSTELLUNG

LIQUIDES NUTRITIFS RICHES EN PROTÉINES, CONTENANT DE LA CASÉINE MICELLAIRE, ENRICHIS EN COMPOSÉS DE CATÉCHINE ET PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.05.2021 EP 21174628**

(43) Date of publication of application:
**27.03.2024 Bulletin 2024/13**

(73) Proprietor: **Arla Foods amba**
**8260 Viby J (DK)**

(72) Inventors:
• **ALEXANDER, Marcela**
**8260 Viby J (DK)**
• **PINHOLT, Birgitte**
**8260 Viby J (DK)**

(74) Representative: **Guardian**
**IP Consulting I/S**
**Diplomvej, Building 381**
**2800 Kgs. Lyngby (DK)**

(56) References cited:
EP-A1- 2 074 891      WO-A1-2021/094397
US-A1- 2011 008 485   US-A1- 2014 275 283

• **J.E. O'CONNELL ET AL: "Effects of Tea, Coffee and Cocoa Extracts on the Colloidal Stability of Milk and Concentrated Milk", INTERNATIONAL DAIRY JOURNAL, vol. 8, no. 8, 1 August 1998 (1998-08-01), GB, pages 689 - 693, XP055411746, ISSN: 0958-6946, DOI: 10.1016/S0958-6946(98) 00105-8**

EP 4 340 640 B1

(52) Cooperative Patent Classification (CPC): (Cont.)

C-Sets
A23V 2002/00, A23V 2200/238, A23V 2250/2132,
A23V 2250/54246

**Description**

**BACKGROUND**

Nutritional products containing milk protein have a range of interesting benefits due to the favourable amino acid composition and digestibility of milk protein.

US5683984A discloses enteral compositions of protein, lipids and minerals, which are suitable for tube feeding, employ native micellar casein as the protein. The compositions are prepared by obtaining native micellar casein and combining it with the glucides, lipids and minerals. A dispersion of micellar casein may be obtained by microfiltering milk, particularly skim milk, and glucides, and minerals are dispersed in the micellar casein retentate obtained, lipids are added to the resulting dispersion and then the mixture is homogenized and sterilized. The microfiltered retentate may be diafiltered for obtaining the dispersion.

WO2013/129912A1 discloses the provision of liquid enteral compositions for providing nutrition, either as a supplement, or as a complete nutrition, comprising a high protein content, in particular micellar casein as major protein source, in a small volume of liquid, in particular 6 to 20 g protein per 100 ml of the liquid composition. The compositions further comprise lactic acid and have a pH in the range of 6 to 8.

WO2011/112075A1 pertains to medical dairy products having a content of micellar casein of 6 to 20 g/100 ml and a pH of about 6 to 8. WO2011/112075A1 suggests that the viscosity and the transparency of such dairy products can be controlled independently of each other by the use of one or more chelating agents selected from the group of a phosphoric acid, citric acid, a soluble phosphate salt, a soluble citrate salt, or a mixture thereof. It was found that products become more viscous after addition of phytate, citrate, or orthophosphate, and that the viscosity depends on concentration and type of phosphate. Addition of hexametaphosphate leads to gel formation. In contrast, high concentrations of uridine monophosphate can be added without significantly affecting the viscosity.

O'Connell et al. ("Effects of phenolic compounds on the heat stability of milk and concentrated milk", Journal of Dairy Research, vol. 66, 1 January 1999, pages 399-407) disclose a study of the heat-coagulation time of skimmed milk and concentrated skimmed milk enriched with phenolic compounds such as e.g. epigallocatechin gallate. The used concentrated skimmed milk contained 225 g solids/L. However, the protein content of the concentrated skimmed milk is not directly and unambiguously derivable from the document.

US 2011/008485 A1 discloses high protein, micellar casein-based liquid enteral nutritional composition which contain micellar casein and optionally caseinate. Liquid enteral nutritional compositions are disclosed comprising 10 to 20 g of protein per 100 ml of the composition, in which all or a major part of said protein comprises native micellar casein. Also, a method is disclosed for producing the composition according to the invention, comprising a step wherein an aqueous protein solution in which all or a major part of said protein comprises native micellar casein, is subjected to an evaporation step.

**SUMMARY OF THE INVENTION**

The present inventors have found that the production of high protein, nutritional products is limited by processing difficulties, which are particularly pronounced if the milk protein contains a significant amount of micellar casein. Formation of highly viscous, gel-like structure at refrigeration temperatures is a challenge and may lead to undesired clogging during processing and/or storage of intermediary protein products. The phenomenon is referred to as cold gelation or cold thickening. The formation of highly viscous, gel-like structures at low temperature is also a problem for liquid nutritional beverage products having a high content of micellar casein and may give the consumer the impression of a defect product if the product has been refrigerated.

The inventors have furthermore discovered that the problem of low temperature thickening or gel formation can be solved by incorporation of different catechin compounds in the liquid during or prior to processing.

The terms "cold gelation", "cold thickening", "low temperature thickening" or "low temperature gel formation" refer to thickening, i.e. increase in viscosity, or gel formation that occurs in nutritional liquids at ambient or refrigeration temperatures, preferably about 5 degrees C and typically upon storage at these temperatures.

The present invention, which is defined by the claims, relates to:

A nutritional liquid having a pH in the range of 6-8 and comprising:

- a content of total protein of 10-25% w/w,
- one or more of catechin, epicatechin, gallocatechin, epigallocatechin, catechin 3-gallate, epicatechin 3-gallate, gallocatechin 3-gallate, and epigallocatechin 3-gallate,

and wherein the nutritional liquid has a weight ratio between:

- the sum of the amounts of catechin, epicatechin, gallocatechin, epigallocatechin, catechin 3-gallate, epicatechin 3-gallate, gallocatechin 3-gallate, and epigallocatechin 3-gallate, and
- total protein

in the range of 0.001-0.2, and
wherein the nutritional liquid:

- comprises micellar casein in an amount of 50% to less than 70% w/w relative to total protein, or
- comprises:

    - micellar casein in an amount of 50-90% w/w relative to total protein and - caseinate in an amount of 1-40% w/w relative to total protein.

Another aspect of the invention pertains to a nutritional powder comprising, or even consisting of, the solids of the nutritional liquid described herein and water in an amount of at most 10% w/w.

Yet an aspect of the invention pertains to a method of producing a nutritional liquid comprising the step of:

a) forming a liquid mixture by combining a polyphenol source comprising one or more of catechin, epicatechin, gallocatechin, epigallocatechin, catechin 3-gallate, epicatechin 3-gallate, gallocatechin 3-gallate, and epigallocatechin 3-gallate, a milk protein source and optionally other ingredients, said liquid mixture comprising

- a content of total protein of 10-25% w/w,and
- one or more of catechin, epicatechin, gallocatechin, epigallocatechin, catechin 3-gallate, epicatechin 3-gallate, gallocatechin 3-gallate, and epigallocatechin 3-gallate,and wherein

the liquid mixture has a weight ratio between:

- the sum of the amounts of catechin, epicatechin, gallocatechin, epigallocatechin, catechin 3-gallate, epicatechin 3-gallate, gallocatechin 3-gallate, and epigallocatechin 3-gallate, and
- total protein

in the range of 0.001-0.2, and
wherein the nutritional liquid:

- comprises micellar casein in an amount of 50% to less than 70% w/w relative to total protein, or
- comprises:

    - micellar casein in an amount of 50-90% w/w relative to total protein and
    - caseinate in an amount of 1-40% w/w relative to total protein.

b) preferably, filling the liquid mixture into a suitable container.

Another aspect, which is not part of the invention as claimed, pertains to a nutritional liquid obtainable by the above-mentioned method

A further aspect of the invention pertains to the use of one or more of catechin, epicatechin, gallocatechin, epigallocatechin, catechin 3-gallate, epicatechin 3-gallate, gallocatechin 3-gallate, and epigallocatechin 3-gallate for:

- reducing or preventing cold gelation,
- reducing or preventing cold thickening, and/or
- reducing the viscosity, preferably immediately after sterilising heat-treatment, of a nutritional liquid having a pH in the range of 6-8 and comprising:

    protein in an amount of at least 10% w/w, and
    wherein the nutritional liquid:

    - comprises micellar casein in an amount of 50% to less than 70% w/w relative to total protein, or
    - comprises:

- micellar casein in an amount of 50-90% w/w relative to total protein and
- caseinate in an amount of 1-40% w/w relative to total protein.

**BRIEF SUMMARY OF THE FIGURES**

Figure 1 shows the molecular structures of the catechin compounds used in the invention wherein $R_1$ is hydrogen or a hydroxy group, and wherein $R_2$ is a hydroxy group or a gallate group.

Figure 2 shows the viscosity at 5 degrees C of nutritional liquids containing 11% w/w MCI and weight ratios between catechin compounds and protein of 0 (control), 0.06 and 0.10 at different shear rates.

Figure 3 shows the viscosity at 5 degrees C of nutritional liquids containing 12% w/w MCI and weight ratios between catechin compounds and protein of 0 (control), 0.06 and 0.10 at different shear rates.

Figure 4 shows the viscosity at 5 degrees C of nutritional liquids containing 13% w/w MCI and weight ratios between catechin compounds and protein of 0.01 and 0.03 at different shear rates.

Figure 5 shows the development of viscosity over time at 5 degrees C of nutritional liquids containing 11% w/w MCI and weight ratios between catechin compounds and protein of 0 (control), 0.06 and 0.10.

Figure 6 shows the development of viscosity over time at 5 degrees C of nutritional liquids containing 12% w/w MCI and weight ratios between catechin compounds and protein of 0 (control), 0.06 and 0.10.

Figure 7 shows the development of viscosity over time at 5 degrees C of nutritional liquids containing 13% w/w MCI and weight ratios between catechin compounds and protein of 0.01 and 0.03.

Figure 8 illustrates the impact of heat-treatment at different temperatures and no heat-treatment on the viscosity of a nutritional liquid.

Figure 9 illustrates the development in viscosity over time at 5 degrees C in nutritional liquids containing catechin-compounds and the effect of heat-treatment vs. no heat-treatment.

Figure 10 compares the viscosities of MPC-based and MCI-based nutritional liquids having a weight ratios between catechin compounds and protein of 0.06 and also includes an MPC control containing no catechin compounds.

Figure 11 shows the viscosity of heat-treated nutritional liquids immediately after heat-treatment at different weight ratios between catechin and protein; the nutritional liquids contained 12, 15, 18, and 20% w/w protein based on a micellar casein isolate.

Figure 12 shows the viscosity of heat-treated nutritional liquids immediately after heat-treatment at different weight ratios between catechin and protein; the nutritional liquids contained 12, 15, 18, and 20% w/w protein based on a milk protein isolate.

Figure 13 shows the viscosity of heat-treated nutritional liquids after 6 months storage at 5 degrees C at different weight ratios between catechin and protein; the nutritional liquids contained 12, 15, 18, and 20% w/w protein based on a micellar casein isolate.

Figure 14 shows the viscosity of heat-treated nutritional liquids after 6 months storage at 5 degrees C at different weight ratios between catechin and protein; the nutritional liquids contained 12, 15, 18, and 20% w/w protein based on a milk protein isolate.

**DETAILED DESCRIPTION**

An aspect of the invention pertains to a nutritional liquid, and preferably a heat-treated and/or sterile nutritional liquid, having a pH in the range of 6-8 and comprising:

- a content of total protein of 10-25% w/w,
- one or more of catechin, epicatechin, gallocatechin, epigallocatechin, catechin 3-gallate, epicatechin 3-gallate, gallocatechin 3-gallate, and epigallocatechin 3-gallate,and

wherein the nutritional liquid has a weight ratio between:

- the sum of the amounts of catechin, epicatechin, gallocatechin, epigallocatechin, catechin 3-gallate, epicatechin 3-gallate, gallocatechin 3-gallate, and epigallocatechin 3-gallate, and
- total protein

in the range of 0.001-0.2, and wherein the nutritional liquid:

- comprises micellar casein in an amount of 50% to less than 70% w/w relative to total protein, or
- comprises:

  - micellar casein in an amount of 50-90% w/w relative to total protein and
  - caseinate in an amount of 1-40% w/w relative to total protein.

In the context of the present invention the term "nutritional liquid" pertains to a liquid which is suitable as a food product and that contains at least protein and water. A nutritional liquid may be preferably be nutritionally complete meaning that it contains all macro nutrients and micro nutrients to fulfil the nutritional needs of an adult human. Alternatively, but also preferred, nutritional liquid may be nutritionally incomplete meaning that it lacks at least some macronutrients and/or micronutrients to be complete but is still useful as a nutritional supplement.

In the context of the present invention the term "sterile" means that the sterile composition or product in question does not contain any viable microorganisms and therefore is devoid of microbial growth during storage at room temperature. A composition, e.g. a liquid or a powder, that has been sterilised is sterile.

In the context of the present invention the term "heat-treatment" or "heat-treated" pertains to a treatment wherein the substance in question is heated to at least 70 degrees C for duration sufficient to provide at least some microbial reduction.

In the context of the present invention the term "micellar casein" and "casein micelles" pertain to casein in form of micelle-like structures comprising the difference casein species as well as minerals such as calcium and phosphate. The term "native micellar casein" pertains to the casein micelles found in and isolates from milk, e.g. by ultracentrifugation or microfiltration, typically using microfiltration membrane having a pore size that retains casein micelles but allows for the passage of whey protein. Microfiltration membranes having a pore size of 0.05-0.3 micron are preferred. The micellar casein of the nutritional liquid is typically slightly modified relative to native casein micelles due the interaction with polyphenol and optionally due to the heat-treatment that may form part of the method of the present invention. The amount of micellar casein is typically determined by separation of the casein micelles by ultracentrifugation, preferably by initial equilibration at 30 degrees C for 1 hour and centrifugation at 100,000 g for 1 hour at the same temperature, and subsequent quantification of the amount separated caseins by HPLC, preferably as outlined in Bobe et al, (Separation and Quantification of Bovine Milk Proteins by Reversed-Phase High-Performance Liquid Chromatography; Bobe et al; J. Agric. Food Chem. 1998, 46, 458-463).

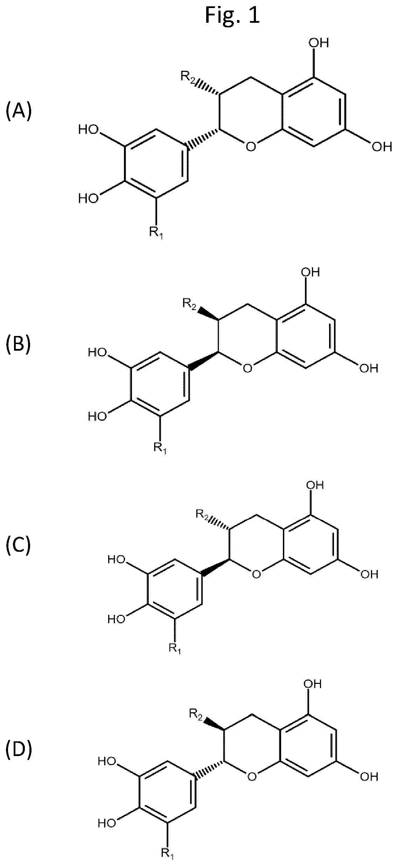

In the context of the present invention the term "catechin" pertains to molecule C, or D, or a mixture of both C and D of Figure 1, wherein $R_1$ is hydrogen and $R_2$ is a hydroxy group.

In the context of the present invention the term "epicatechin" pertains to molecule A, or B, or a mixture of both A and B of Figure 1, wherein $R_1$ is hydrogen and $R_2$ is a hydroxy group.

In the context of the present invention the term "gallocatechin" pertains to molecule C, or D, or a mixture of both C and D of Figure 1, wherein $R_1$ is hydroxy group and $R_2$ is a hydroxy group.

In the context of the present invention the term "epigallocatechin" pertains to molecule A, or B, or a mixture of both A and B of Figure 1, wherein $R_1$ is a hydroxy group and $R_2$ is a hydroxy group.

In the context of the present invention the term "catechin 3-gallate" pertains to molecule C, or D, or a mixture of both C and D of Figure 1, wherein $R_1$ is hydrogen and $R_2$ is a gallate group.

In the context of the present invention the term "epicatechin 3-gallate" pertains to molecule A, or B, or a mixture of both A and B of Figure 1, wherein $R_1$ is hydrogen and $R_2$ is a gallate group.

In the context of the present invention the term "gallocatechin 3-gallate" pertains to molecule C, or D, or a mixture of both C and D of Figure 1, wherein $R_1$ is hydroxy group and $R_2$ is a gallate group.

In the context of the present invention the term "epigallocatechin 3-gallate" pertains to molecule A, or B, or a mixture of both A and B of Figure 1, wherein $R_1$ is a hydroxy group and $R_2$ is a gallate group.

In some preferred embodiments of the invention the nutritional liquid has a weight ratio between:

- the sum of the amounts of catechin, epicatechin, gallocatechin, epigallocatechin, catechin 3-gallate, epicatechin 3-gallate, gallocatechin 3-gallate, and epigallocatechin 3-gallate, and
- total protein

in the range of 0.0001-0.2.

In some preferred embodiments of the invention the weight ratio between:

- the sum of catechin, epicatechin, gallocatechin, epigallocatechin, catechin 3-gallate, epicatechin 3-gallate, gallocatechin 3-gallate, and epigallocatechin 3-gallate, and
- total protein

of the nutritional liquid is in the range of 0.0005-0.15, more preferably in the range of 0.001-0.10, even more preferably in the range of 0.01-0.06, and most preferably in the range of 0.02-0.04.

The amounts of catechin compounds are measured by Analysis 13.

In other preferred embodiments of the invention the weight ratio between:

- the sum of catechin, epicatechin, gallocatechin, epigallocatechin, catechin 3-gallate, epicatechin 3-gallate, gallocatechin 3-gallate, and epigallocatechin 3-gallate, and
- total protein

of the nutritional liquid is in the range of 0.005-0.20, more preferably in the range of 0.01-0.15.

In further preferred embodiments of the invention the weight ratio between:

- the sum of catechin, epicatechin, gallocatechin, epigallocatechin, catechin 3-gallate, epicatechin 3-gallate, gallocatechin 3-gallate, and epigallocatechin 3-gallate, and
- total protein

of the nutritional liquid is in the range of 0.002-0.20, more preferably in the range of 0.003-0.15, even more preferably in the range of 0.005-0.10, and most preferably in the range of 0.007-0.10.

In some preferred embodiments of the invention the nutritional liquid has a weight ratio between:

- the sum of the amounts of epicatechin, epigallocatechin and epigallocatechin 3-gallate, and
- total protein

in the range of 0.0001-0.2.

In some preferred embodiments of the invention the weight ratio between:

- the sum of epicatechin, epigallocatechin and epigallocatechin 3-gallate, and
- total protein

of the nutritional liquid is in the range of 0.0005-0.15, more preferably in the range of 0.001-0.10, even more preferably in the range of 0.01-0.06, and most preferably in the range of 0.02-0.04.

In other preferred embodiments of the invention the weight ratio between:

- the sum of epicatechin, epigallocatechin and epigallocatechin 3-gallate, and
- total protein

of the nutritional liquid is in the range of 0.005-0.20, more preferably in the range of 0.01-0.15.

In further preferred embodiments of the invention the weight ratio between:

- the sum of epicatechin, epigallocatechin and epigallocatechin 3-gallate, and
- total protein

of the nutritional liquid is in the range of 0.002-0.20, more preferably in the range of 0.003-0.15, even more preferably in the range of 0.005-0.10, and most preferably in the range of 0.007-0.10.

In some preferred embodiments of the invention the nutritional liquid has a weight ratio between:

- the sum of the amounts of epigallocatechin and epigallocatechin 3-gallate, and

- total protein

in the range of 0.0001-0.2.

In some preferred embodiments of the invention the weight ratio between:

- the sum of epigallocatechin and epigallocatechin 3-gallate, and
- total protein

of the nutritional liquid is in the range of 0.0005-0.15, more preferably in the range of 0.001-0.10, even more preferably in the range of 0.01-0.06, and most preferably in the range of 0.02-0.04.

In other preferred embodiments of the invention the weight ratio between:

- the sum of epigallocatechin and epigallocatechin 3-gallate, and
- total protein

of the nutritional liquid is in the range of 0.005-0.20, more preferably in the range of 0.01-0.15.

In further preferred embodiments of the invention the weight ratio between:

- the sum of epigallocatechin and epigallocatechin 3-gallate, and
- total protein

of the nutritional liquid is in the range of 0.002-0.20, more preferably in the range of 0.003-0.15, even more preferably in the range of 0.005-0.10, and most preferably in the range of 0.007-0.10.

In some preferred embodiments of the invention the nutritional liquid has a weight ratio between epigallocatechin 3-gallate (EGCG) and total protein in the range of 0.0001-0.2.

In some preferred embodiments of the invention the weight ratio between epigallocatechin 3-gallate and total protein of the nutritional liquid in the range of 0.0005-0.15, more preferably in the range of 0.001-0.10, even more preferably in the range of 0.01-0.06, and most preferably in the range of 0.02-0.04.

In other preferred embodiments of the invention the weight ratio between epigallocatechin 3-gallate and total protein of the nutritional liquid in the range of 0.005-0.20, more preferably in the range of 0.01-0.15.

In further preferred embodiments of the invention the weight ratio between epigallocatechin 3-gallate and total protein of the nutritional liquid in the range of 0.002-0.20, more preferably in the range of 0.003-0.15, even more preferably in the range of 0.005-0.10, and most preferably in the range of 0.007-0.10.

In the context of the present invention the term "weight ratio" between "A" and "B" pertains to the ratio "weight of A" divided by "weight of B". For example:

- if the amount of epigallocatechin 3-gallate in the nutritional liquid is 0.50 g/100 g, and
- if the content of total protein in the nutritional liquid is 10 g/100 g,

then the weight ratio between epigallocatechin 3-gallate and total protein is 0.50/10 = 0.05.

In the context of the present invention the term "polyphenol" pertains to a molecule having at least 2 phenolic hydroxy groups and molecular weight of at least 150 g/mol.

The nutritional liquid may contain other polyphenols in addition to the above-mentioned catechin-derivatives and in some embodiments of the invention the nutritional liquid therefore comprises one or more additional polyphenol(s).

In some preferred embodiments of the invention the one or more additional polyphenol(s) comprise one or more compound(s) selected from the group consisting of flavonoids, phenolic acids, stilbenoids, tannins, and lignans.

In some preferred embodiments of the invention the one or more additional polyphenol(s) comprise a flavonoid.

In other preferred embodiments of the invention the one or more additional polyphenol(s) comprise a diarylheptanoid. A preferred example of a diarylheptanoid is curcumin, hence the one or more additional polyphenol(s) comprise or even consist of curcumin.

In yet other preferred embodiments of the invention the one or more additional polyphenol(s) comprise a stilbenoid. A preferred example of a stilbenoid is resveratrol, hence the one or more additional polyphenol(s) comprise or even consist of resveratrol.

In some preferred embodiments of the invention catechin, epicatechin, gallocatechin, epigallocatechin, catechin 3-gallate, epicatechin 3-gallate, gallocatechin 3-gallate, and epigallocatechin 3-gallate is present in the nutritional liquid in a combined amount of at least 20% w/w relative to the total amount of polyphenol, more preferably at least 50% w/w, even more preferably at least 70% w/w and most preferably at least 90% w/w.

In other preferred embodiments of the invention EGCG is present in the nutritional liquid in an amount of at least 20% w/w relative to the total amount of polyphenol, more preferably at least 50% w/w, even more preferably at least 70% w/w and most preferably at least 90% w/w.

The total amount of polyphenol of a sample is determined according to Analysis 14.

The present invention advantageously enables the production and easy handling of nutritional liquids having high protein content.

According to the invention the total amount of protein of the nutritional liquid is at least 10% w/w, more preferably at least 12% w/w, even more preferably at least 14% w/w and most preferably at least 16% w/w.

In some preferred embodiments of the invention the total amount of protein of the nutritional liquid is in range of 10-24% w/w, more preferably 10-22% w/w, even more preferably 12-21% w/w and most preferably 14-20% w/w.

In other preferred embodiments of the invention the total amount of protein of the nutritional liquid is in range of 10-20% w/w, more preferably 11-19% w/w, even more preferably 12-18% w/w and most preferably 13-19% w/w.

In further preferred embodiments of the invention the total amount of protein of the nutritional liquid is in range of 10-25% w/w, more preferably 12-24% w/w, even more preferably 14-22% w/w and most preferably 16-20% w/w.

In some preferred embodiments of the invention the nutritional liquid has:

- a total amount of protein of in the range of 10-25% w/w, more preferably 12-24% w/w, even more preferably 14-22% w/w and most preferably 16-20% w/w, and
- a weight ratio between:

    - the sum of the amounts of catechin, epicatechin, gallocatechin, epigallocatechin, catechin 3-gallate, epicatechin 3-gallate, gallocatechin 3-gallate, and epigallocatechin 3-gallate, and
    - total protein

in the range of 0.002-0.2, more preferably 0.005-0.15, even more preferably 0.02-0.15, and most preferably 0.04-0.15.

In some preferred embodiments of the invention, the nutritional liquid comprises micellar casein in an amount of 50% to less than 70%

relative to total protein.

The inventor has found that nutritional liquids containing between 50% up to less than 70% micellar casein relative to total protein often are preferred, and the reduced content of micellar casein leave more freedom to optimize the nutritional benefits of the protein fraction of the nutritional liquid.

In some particularly preferred embodiments of the present invention, the nutritional liquid comprises micellar casein in an amount of 50% to less than 70% w/w relative to total protein.

Preferably, the nutritional liquid comprises micellar casein in an amount of 50-69% w/w relative to total protein, more preferably 50-68% w/w relative to total protein, even more preferably 51-67% w/w relative to total protein, and most preferably 52-66% w/w.

The nutritional liquid may also contain whey protein and it is preferred that a significant amount of the non-casein protein is whey protein.

The source of whey protein may e.g. contain native, non-native, and/or aggregated whey proteins. Sources of microparticulated whey protein, e.g. according to WO2015059243 or WO2015059248A1, and/or sources of whey protein micelles according to WO2007110411 A2 or whey protein nanogels according to WO2021136785A1, and sources of native whey protein, such as native whey protein concentrates or native whey protein isolates, are preferred.

The source of micellar casein typically contributes with some whey protein too, preferably substantially native whey protein.

In some preferred embodiments of the invention whey protein provides at least 20% w/w of the total protein of the nutritional liquid that is not micellar casein, more preferably at least 40% w/w, even more preferably at least 70% w/w, and most preferably at least 90% w/w of the total protein that is not micellar casein.

In some preferred embodiments of the invention the protein of the nutritional liquid is milk protein, i.e. protein derived from milk or milk fractions such as e.g. whey.

It is often preferred that the nutritional liquid comprises micellar casein and whey protein in a combined amount of at least 55% w/w relative to total protein, more preferably at least 60% w/w, even more preferably at least 70% w/w, and most preferably at least 80% w/w.

Preferably, the nutritional liquid comprises micellar casein and whey protein in a combined amount of at least 85% w/w relative to total protein, more preferably at least 88% w/w, even more preferably at least 90% w/w, and most preferably at least 95% w/w.

In some preferred embodiments of the present invention, the nutritional liquid comprises whey protein in an amount of 1-50% w/w relative to total protein, more preferably 5-45% w/w, even more preferably 10-40% w/w, and most preferably 15-35% w/w.

In other preferred embodiments of the present invention, the nutritional liquid comprises whey protein in an amount of 20-50% w/w relative to total protein, more preferably 25-45% w/w, even more preferably 30-40% w/w, and most preferably 25-35% w/w.

In some preferred embodiments of the present invention, the nutritional liquid comprises:

- micellar casein in an amount of 50-69% w/w relative to total protein, more preferably 51-69% w/w, even more preferably 52-60% w/w, and most preferably 53-60% w/w and
- whey protein in an amount of 20-50% w/w relative to total protein, more preferably 25-45% w/w, even more preferably 30-40% w/w, and most preferably 25-35% w/w.

In some preferred embodiments of the present invention, the nutritional liquid comprises micellar casein and caseinate in a combined amount of at least 85% w/w relative to total protein, more preferably at least 88% w/w, even more preferably at least 90% w/w, and most preferably at least 95% w/w.

In the context of the present invention, the term "caseinate" encompasses non-micellar caseins such as sodium caseinate, potassium caseinate, calcium caseinate, and isolated casein species. Sodium caseinate and potassium caseinate are particularly preferred.

For example, in some embodiments of the present invention, the nutritional liquid comprises caseinate in an amount of 1-50% w/w relative to total protein, more preferably 5-45% w/w, even more preferably 10-40% w/w, and most preferably 15-35% w/w.

The nutritional liquid may e.g. comprise caseinate in an amount of 20-50% w/w relative to total protein, more preferably 25-45% w/w, even more preferably 30-40% w/w, and most preferably 25-35% w/w.

The inventor has found that it is often preferred to keep the caseinate content low, and in some preferred embodiments of the invention, nutritional liquid comprises caseinate in an amount of 0-15% w/w relative to total protein, more preferably 0.1-10% w/w, even more preferably 0.1-7% w/w, and most preferably 0.1-4% w/w. It may even be preferred that the nutritional liquid does not comprise caseinate.

In some preferred embodiments of the present invention, the nutritional liquid comprises:

- micellar casein in an amount of 50-90% w/w relative to total protein, more preferably 50-80% w/w, even more preferably 50-70% w/w, and most preferably 50-75% w/w and
- caseinate in an amount of 1-40% w/w relative to total protein, more preferably 1-30% w/w, even more preferably 1-20% w/w, and most preferably 1-10% w/w.

The inventor has found that for caseinate-containing nutritional liquids, it is often advantageous that the preparation of the nutritional liquid involves mixing micellar casein with catechin compound(s) prior to the addition of caseinate. The mixing of micellar casein and the catechin compound(s) is preferably performed in an aqueous liquid.

In some preferred embodiments of the present invention, if the nutritional liquid contains caseinate in an amount of 1-40% w/w relative to total protein, more preferably 5-40% w/w; even more preferably 10-40% w/w, and most preferably 15-40% w/w relative to total protein, the preparation of the nutritional liquid involves mixing micellar casein with the catechin compound(s) prior to the addition of caseinate. The mixing of micellar casein and the catechin compound(s) is preferably performed in an aqueous liquid.

In further preferred embodiments of the present invention, the preparation of the nutritional liquid involves mixing micellar casein with the catechin compound(s) source prior to the addition of other optional protein sources. The mixing of micellar casein and the catechin compound(s) is preferably performed in an aqueous liquid.

In other embodiments of the invention the nutritional liquid also comprises non-milk protein such as e.g. vegetable protein, egg protein, a hydrolysate of caseinate, a hydrolysate of whey protein, or any combination thereof.

The nutritional liquid often contains carbohydrate in addition to protein. In some preferred embodiments of the invention the nutritional liquid has a total amount of carbohydrates of at least 5% w/w, more preferably at least 7% w/w, even more preferably at least 10% w/w, and most preferably at least 15% w/w.

In some preferred embodiments of the invention the nutritional liquid has a total amount of carbohydrates in the range of 5-25% w/w, more preferably, 7-22% w/w, even more preferably 10-20% w/w, and most preferably 12-18% w/w.

However, for some applications it is preferred that the content of carbohydrate is kept low, e.g. to reduce the caloric content of the liquid. Thus, in other preferred embodiments of the invention the nutritional liquid has a total amount of carbohydrates of at most 4%w/w, more preferably at most 2% w/w, even more preferably at most 0.5% w/w, and most preferably at most 0.1% w/w.

It may also be preferred that the nutritional liquid has a very low content of lactose, particularly if the nutritional liquid is intended for subjected with lactose-intolerance. Thus, in some preferred embodiments of the invention the nutritional liquid has a total amount of lactose of at most 1%w/w, more preferably at most 0.1% w/w, even more preferably at most 0.01% w/w, and most preferably at most 0.001% w/w.

Non-limiting examples of useful carbohydrates are edible mono-, di-, oligo- and/or polysaccharides, such as e.g.

glucose, galactose, fructose, arabinose, ribose, tagatose, sucrose, maltose, maltriose, maltodextrin, fructo oligosaccharides, galacto oligosaccharides, fucosyl lactose, sialyl lactose, bovine milk oligosaccharide, human milk oligosaccharide, and combinations thereof.

In some preferred embodiments of the invention the nutritional liquid comprises at most 0.10 mol/L reducing carbohydrate, more preferably at most 0.03 mol/L reducing carbohydrate, even more preferably at most 0.01 mol/L reducing carbohydrate, and most preferably at most 0.003 mol/L reducing carbohydrate. The present inventors have observed that a low content of reducing carbohydrate tends to reduce or prevent maillard-based browning of the nutritional liquid or powders made thereof.

In some preferred embodiments of the invention the nutritional liquid comprises 0.0001-0.10 mol/L reducing carbohydrate, more preferably 0.001-0.03 mol/L reducing carbohydrate, and most preferably 0.001-0.01 mol/L reducing carbohydrate.

Nutritional liquids containing a relative low content of reducing carbohydrate may in some preferred embodiments contain a considerable amount of carbohydrate, e.g. of 5-25% w/w, more preferably, 7-22% w/w, even more preferably 10-20% w/w, and most preferably 12-18% w/w, as long as the carbohydrate primarily contains non-reducing carbohydrates and/or carbohydrates having a degree of polymerisation larger than 2, i.e. oligo- or polysaccharides.

The nutritional liquid often contains lipid, and for some nutritional applications the presence of lipid is advantageous. In some preferred embodiments of the invention the nutritional liquid has a total amount of lipid of at least 2%w/w, more preferably at least 5% w/w, even more preferably at least 8% w/w, and most preferably at least 10% w/w.

In some preferred embodiments of the invention the nutritional liquid has a total amount of lipid in the range of 2-20% w/w, more preferably, 5-18% w/w, even more preferably 8-15% w/w, and most preferably 10-14% w/w.

In some embodiments the amount of lipid of the nutritional liquid may range between 5 and 95%, preferably between 10 and 70%, more preferably between 20 and 40%, relative to the total energy content of the nutritional liquid.

With regard to the type of lipid, a wide choice is possible, as long as the lipid is of food quality. The lipid may either be an animal lipid or a vegetable lipid or both. Although animal lipids such as lard or butter have essentially equal caloric and nutritional values and can be used interchangeably, vegetable oils are highly preferred in the practice of the present invention due to their readily availability, ease of formulation, absence of cholesterol and lower concentration of saturated fatty acids. In one embodiment, the present composition comprises rapeseed oil, corn oil and/or sunflower oil.

The lipid may include a source of medium chain fatty acids, such as medium chain triglycerides (MCT, mainly 8 to 10 carbon atoms long), a source of long chain fatty acids, such as long chain triglycerides (LCT) and phospholipid-bound fatty acids such as phospholipid-bound EPA or DHA, or any combination of the two types of sources. MCTs are beneficial because they are easily absorbed and metabolized in a metabolically-stressed patient. Moreover, the use of MCTs will reduce the risk of nutrient malabsorption. LCT sources, such as canola oil, rapeseed oil, sunflower oil, soybean oil, olive oil, coconut oil, palm oil, linseed oil, marine oil or corn oil are beneficial because it is known that LCTs may modulate the immune response in the human body.

In some embodiments, the lipid comprises 30 to 60 weight % of animal, algal or fungal fat, 40 to 70 weight % of vegetable fat and optionally 0 to 20 weight % of MCTs based on total fat of the composition. The animal fat preferably comprises a low amount of milk fat, i.e. lower than 6 weight %, especially lower than 3 weight % based on total fat. In particular, a mixture of corn oil, egg oil, and/or canola oil and specific amounts of marine oil is used. Egg oils, fish oils and algal oils are a preferred source of non-vegetable fats. Especially for compositions that are to be consumed orally, in order to prevent formation of off-flavours and to decrease a fishy aftertaste, it is recommended to select ingredients that are relatively low in docosahexaenoic acid (DHA), i.e. less than 6 weight %, preferably less than 4 weight % based on total fat. Marine oils containing DHA are preferably present in the composition according to the invention in an amount lower than 25 weight %, preferably lower than 15 weight % based on total fat. On the other hand, inclusion of eicosapentaenoic acid (EPA) is highly desirable for obtaining the maximum health effect. Therefore, in another embodiment, the amount of EPA may range between 4 weight % and 15 weight %, more preferably between 8 weight % and 13 weight % based on total fat. The weight ratio EPA:DHA is advantageously at least 6:4, for example between 2:1 and 10:1. In yet another embodiment, the amount of EPA is very low, such as 0.1 to 1 weight %, preferably 0.3 weight % or 0.6 weight %, based on total lipid.

Also, the nutritional liquid according to the invention may beneficially comprise an emulsifier. Commonly known emulsifiers may be used and generally the emulsifier contributes to the energy content of the lipid in said nutritional liquid.

In other preferred embodiments of the invention, e.g. for sports nutrition, the nutritional liquid has a the total amount of lipid of at most 1%w/w, more preferably at most 0.3% w/w, even more preferably at most 0.1% w/w, and most preferably at most 0.01% w/w.

The nutritional liquid according to the invention may be is designed to either supplement a person's diet or to provide complete nutritional support. Hence, the nutritional liquid according to the invention may further comprise at one or more nutritional components such as vitamins, minerals, trace elements and/or a source of indigestible carbohydrates. Preferably, the nutritional liquid according the invention is a nutritionally complete nutritional liquid.

The nutritional liquid according to the invention may contain a variety of vitamins, minerals and trace elements.

In some preferred embodiments of the invention the nutritional liquid comprises sodium in an amount in the range of 10-200 mg/100 mL, more preferably 30-120 mg/100 mL, even more preferably 50-90 mg/100 mL, and most preferably 60-75 mg/100 mL.

In some preferred embodiments of the invention the nutritional liquid comprises potassium in an amount in the range of 10-250 mg/100 mL, more preferably 40 -200 mg/100 mL, even more preferably 120-175 mg/100 mL, and most preferably 155-165 mg/100 mL.

In some preferred embodiments of the invention the nutritional liquid comprises chlorine in an amount in the range of 10-200 mg/100 mL, more preferably 50-150 mg/100 mL, even more preferably 60-100 mg/100 mL, and most preferably 75-85 mg/100 mL.

In some preferred embodiments of the invention the nutritional liquid comprises calcium in an amount in the range of 50-700 mg/100 mL, more preferably 150-500 mg/100 mL, even more preferably 180-300 mg/100 mL, and most preferably 200-220 mg/100 mL.

The present inventors have seen indications that the catechin compounds enables the production of nutritional liquids having a relatively high calcium content which often is advantageous from a nutritional perspective and required if the nutritional liquid should be nutritionally complete. Thus, in some preferred embodiments of the invention the nutritional liquid comprises calcium in an amount in the range of 150-700 mg/100 mL, more preferably 170-500 mg/100 mL, even more preferably 200-400 mg/100 mL, and most preferably 240-300 mg/100 mL.

In some preferred embodiments of the invention the nutritional liquid comprises magnesium in an amount in the range of 5-100 mg/100 mL, more preferably 10-25 mg/100 mL, even more preferably 12-20 mg/100 mL, and most preferably 14-18 mg/100 mL.

In some preferred embodiments of the invention the nutritional liquid comprises phosphorus in an amount in the range of 50-500 mg/100 mL, more preferably 70-300 mg/100 mL, even more preferably 90-200 mg/100 mL, and most preferably 100-150 mg/100 mL.

In some preferred embodiments of the invention the nutritional liquid comprises iron in an amount in the range of 0.1-20 mg/100 mL, more preferably 0.5-10 mg/100 mL, even more preferably 1-5 mg/100 mL, and most preferably 2-3 mg/100 mL.

In some preferred embodiments of the invention the nutritional liquid comprises zinc in an amount in the range of 0.1-10 mg/100 mL, more preferably 0.5-5 mg/100 mL, even more preferably 0.7-3 mg/100 mL, and most preferably 1-2 mg/100 mL.

In some embodiment of the present invention, the nutritional liquid according to the invention provides all necessary vitamins, most of the minerals and trace elements. For example, the nutritional liquid according to the invention preferably provides 6 mg of zinc per 100 ml of the nutritional liquid which is beneficial for tissue repair in a healing patient. Preferably, the nutritional liquid according to the invention (also) provides 25 mg of vitamin C per 100 ml of the nutritional liquid to aid patients with more severe healing requirements. Further, preferably, the nutritional liquid according to the invention (also) provides 2.25 mg iron per 100 ml of the nutritional liquid. Iron is beneficial in maintaining bodily fluids as well as circulatory system functions in an elderly patient.

The invention implicates that a nutritional liquid according to the present invention may contain sodium and/or potassium levels outside FSMP (Foods for Special Medical Purposes) legislation levels.

The nutritional liquid according to the invention may optionally be fortified with non-digestible carbohydrates (dietary fibres) such as fructooligosaccharides or inulin. In some embodiments of the present invention, the nutritional liquid according to the invention comprises 0.5 g/100 ml to 6 g/100 ml of non-digestible carbohydrates. The dietary fibres include non-digestible oligosaccharides having a DP of 2 to 20, preferably 2 to 10. More preferably, these oligosaccharides do not contain substantial amounts (less than 5 weight %) of saccharides outside these DP ranges, and they are soluble. These oligosaccharides may comprise fructo-oligosaccharides (FOS), trans-galacto-oligosaccharides (TOS), xylo-oligosaccharides (XOS), soy oligosaccharides, and the like. Optionally, also higher molecular weight compounds such as inulin, soy polysaccharides, acacia polysaccharides (acacia fibre or arabic gum), cellulose, resistant starch and the like may be incorporated in the nutritional liquid according to the invention. The amount of insoluble fibre such as cellulose is preferably lower than 20 weight % of the dietary fibre fraction of the nutritional liquid according to the invention, and/or below 0.6 g/100 ml. The amount of thickening polysaccharides such as carrageenans, xanthans, pectins, galactomannans and other high molecular weight (DP>50) indigestible polysaccharides is preferably low, i.e. less than 20% of the weight of the fibre fraction, or less than 1 g/100 ml. Instead, hydrolysed polysaccharides such as hydrolysed pectins and galactomannans can advantageously be included.

A preferred fibre component is an indigestible oligosaccharide with a chain length (DP) of 2 to 10, for example Fibersol® (resistant oligoglucose), in particular hydrogenated Fibersol®, or a mixture of oligosaccharides having a DP of 2 to 10, such as fructo-oligosaccharides or galacto-oligosaccharides, which may also contain a small amount of higher saccharides (e.g. with a DP of 11 to 20). Such oligosaccharides preferably comprise 50 weight % to 90 weight % of the fibre fraction, or 0.5 g/100 ml to 3 g/100 ml of the nutritional liquid according to the invention. Other suitable fibre components include saccharides that have only partial digestibility.

In a particular embodiment, the nutritional liquid according to the invention comprises one or more of fructo-oligosaccharides, inulin, acacia polysaccharides, soy polysaccharides, cellulose and resistant starch.

The nutritional liquid may furthermore contain suitable food acids and/or food alkalizing agents.

In some preferred embodiments of the invention, the nutritional liquid comprises one or more non-polyphenol chelating agents, e.g. selected from the group consisting of a phosphoric acid, citric acid, a soluble phosphate salt, a soluble citrate salt, or a mixture thereof.

In the context of the present invention the term "non-polyphenol chelating agent" means a chelating agent that is not a polyphenol according to the present definition of a polyphenol.

In some preferred embodiments of the invention the nutritional liquid comprises one or more non-polyphenol chelating agents selected from the group consisting of a phosphoric acid, a soluble phosphate salt, or a mixture thereof.

According to one embodiment, the phosphoric acid is selected from the group consisting of uridine monophosphoric acid, cytidine monophosphoric acid, orthophosphoric acid, inositol hexa-phosphoric acid, hexametaphosphoric acid, or a mixture thereof, and the phosphate salt is selected from the group consisting of uridine monophosphate, cytidine monophosphate, orthophosphate, inositol hexaphosphate, hexametaphosphate, or a mixture thereof.

If used, the non- polyphenol chelating agent should preferably be added in an amount of 1 to 120 mEq/L of said chelating agent, preferably 5 to 100 mEq/L, more 10 to 80 mEq/L, most preferably 20 to 60 mEq/L.

In some preferred embodiments of the invention the nutritional liquid comprises an amount of lactic acid in an amount between 0.05 and up to 1.5 g/100 mL.

Preferably, the nutritional liquid of the invention comprises lactic acid in an amount between 0.05 and 1.0 g/100 ml, more preferably between 0.1 and 1.0 g/100ml, most preferably between 0.2 and 0.5 g/100ml of the nutritional liquid.

The amount of lactic acid may be linked to the protein content of the product. In some preferred embodiments of the invention the amount of lactic acid is up to 250mg/g protein. More preferably, the amount of lactic acid lies between 1 and 200 mg per gram protein of the total nutritional liquid, preferably between 2.5 and 100 mg/g protein, more preferably between 5 and 75 mg/g protein, most preferably between 10 and 75 mg lactic acid, per gram protein of the nutritional liquid.

Alternatively, the nutritional liquid of the invention may comprise an amount of lactic acid up to 400 mg/g micellar casein of the total nutritional liquid. More preferably, the amount of lactic acid lies between 4 and 300 mg/g protein, more preferably between 10 and 200 mg/g micellar casein, most preferably between 20 and 100 mg lactic acid per g micellar casein of the nutritional liquid.

In a preferred embodiment, the nutritional liquid of the present invention comprises citrate, preferably in an amount up to 1 g/100 mL, preferably in an amount between 1 mg and 500 mg/100 mL, more preferably in an amount between 5 mg and 400 mg/100 mL, more preferably in an amount between 10 mg and 300 mg/100 mL, most preferably in an amount of 15 mg and 100 mg/100 mL of the nutritional liquid. It may be beneficial to include a certain amount of citrate in the nutritional liquid of the invention for prolonged heat-stability and shelf-life.

In some preferred embodiments of the invention, the nutritional liquid comprises a combination of citric acid and lactic acid. The combined amount thereof is preferably up to 2.5 g/100 mL, more preferably this combined amount lies between 0.05 and 2 g/100mL, more preferably between 0.1 and 1.5 g/100mL, even more preferably between 0.25 and 1.0 g/100mL, most preferably between 0.3 and 0.75 g/100mL.

In case lactic acid an citric are both present, the weight amount of lactic acid preferably exceeds the weight amount of citrate, preferably by a factor 1.1 to 20, more preferably by a factor 2 to 18, more preferably a factor 3 to 15 or most preferably 4 to 12. At such ratios, viscosity of the liquid nutritional composition is kept low, while other parameters, such as shelf-life and heat-stability influenced by the presence of citric acid, are kept at sufficient levels.

While both non-polyphenol chelating agents and lactic acid may be preferred in some embodiments of the invention the inventors have found that they surprisingly are not necessary when the nutritional liquid contains catechin-compounds as described herein.

Thus, in some preferred embodiments of the invention the nutritional liquid contains at most 0.1 g lactic acid/100 mL, more preferably at most 0.04 g lactic acid/100 mL, even more preferably at most 0.01 g lactic acid/100 mL and most preferably at most 0.001 g lactic acid/100 mL.

In some preferred embodiments of the invention the nutritional liquid contains non-polyphenol chelating agents in an amount of at most 5 mEq/L, more preferably at most 1 mEq/L, even more preferably at most 0.4 mEq/L and most preferably at most 0.1 mEq/L.

In some preferred embodiments of the invention the nutritional liquid contains a total amount of non-polyphenol chelating agents selected from phosphoric acid, citric acid, a soluble phosphate salt, a soluble citrate salt in an amount of at most 5 mEq/L, more preferably at most 1 mEq/L, even more preferably at most 0.4 mEq/L and most preferably at most 0.1 mEq/L.

The present invention is particularly useful for high solids nutritional liquids.

In some preferred embodiments of the invention the nutritional liquid has a content of total solids in the range of 9-50% w/w; more preferably in the range of 10-40% w/w, even more preferably in the range of in the range of 12-35% w/w, and even more preferably in the range of 16-30% w/w.

In other preferred embodiments of the invention the nutritional liquid has a content of total solids in the range of 20-50% w/w; more preferably in the range of 24-48% w/w, even more preferably in the range of in the range of 28-45% w/w, and even more preferably in the range of 30-43% w/w. These embodiments are particularly useful for nutritionally complete nutritional liquids.

In some preferred embodiments of the invention the nutritional liquid has an energy content of 1-3 kcal/g, more preferably 1.5-3.0 kcal/g, and even more preferably 2.0-2.8 kcal/g.

In other preferred embodiments of the invention the nutritional liquid has an energy content of at most 1 kcal/g, more preferably at most 0.8 kcal/g, and even more preferably at most 0.5 kcal/g.

The nutritional liquid preferably has a water content of at least 50% w/w, more preferably at least 60% w/w, even more preferably at least 65% w/w, and most preferably at least 70% w/w.

Even higher water contents may be preferred, thus in some preferred embodiments of the invention the nutritional liquid has a water content of at least 75% w/w, more preferably at least 80% w/w, even more preferably at least 85% w/w, and most preferably at least 90% w/w.

In some preferred embodiments of the invention the nutritional liquid has a water content in the range of 50-91% w/w; more preferably in the range of 60-90% w/w, even more preferably in the range of in the range of 65-88% w/w, and most preferably in the range of 70-84% w/w.

In some preferred embodiments of the invention the nutritional liquid has a pH in the range of 6.0-8.0, more preferably 6.2-7.5, even more preferably 6.4-7.1, and most preferably 6.5-7.0. In other preferred embodiments of the invention the nutritional liquid has a pH in the range of 6.0-8.0, more preferably 6.0-7.5, even more preferably 6.0-7.1, and most preferably 6.0-7.0.

The present inventors have found that the combination of the catechin compounds and protein colours the nutritional liquid intensely red at e.g. pH 7.3 that that the intensity can be reduced by lowering the pH. The present inventors have also seen indications that the colour problem can be reduced by increasing the amount of casein relative to total protein.

An advantage of the present invention is that the viscosity immediately after production of the nutritional liquid is reduced significantly if a catechin compound is present. This discovery eases the production of the nutritional liquid and makes it more suitable for drinking. The need for technical solutions that keep the viscosity relatively low is particularly pronounce for producing high protein beverage and even more particularly for producing high protein, high calorie beverages.

In some preferred embodiments of the invention the nutritional liquid has a viscosity of at most 400 cP at a temperature of 20 degrees C and a shear rate of 145 s$^{-1}$, preferably at most 200 cP, more preferably at most 100 cP, even more preferably at most 50 cP and most preferably at most 30 cP.

For example, the nutritional liquid may have a viscosity in the range of 2-400 cP at a temperature of 20 degrees C and a shear rate of 145 s$^{-1}$, preferably 4-200 cP, more preferably 5-100 cP, even more preferably 6-50 cP, and most preferably 7-30 cP.

In some preferred embodiments of the invention the nutritional liquid has a viscosity of at most 400 cP at a temperature of 5 degrees C and a shear rate of 145 s$^{-1}$, preferably at most 200 cP, more preferably at most 100 cP, even more preferably at most 50 cP and most preferably at most 30 cP.

The nutritional liquid may e.g. have a viscosity in the range of 2-400 cP at a temperature of 5 degrees C and a shear rate of 145 s$^{-1}$, preferably 4-200 cP, more preferably 5-100 cP, even more preferably 6-50 cP, and most preferably 7-30 cP.

An advantageous feature of the present nutritional liquid is that it is not prone to cold gelation or cold thickening and stays liquid and hence drinkable even after prolonged storage a low temperature.

Thus, in some preferred embodiments of the invention the nutritional liquid has a viscosity after storage at 5 degrees C for 63 days in the range of 2-400 cP at a temperature of 5 degrees C and a shear rate of 145 s$^{-1}$, preferably 4-200 cP, more preferably 5-100 cP, even more preferably 6-50 cP, and most preferably 7-30 cP.

The viscosity of a liquid sample is measured according to Analysis 2.

It is particularly preferred that the nutritional liquid is a sterile nutritional liquid, and more preferably a heat-sterilised nutritional liquid.

In some preferred embodiments of the invention the nutritional liquid is a packaged, sterile nutritional liquid, and preferably a ready-to-drink beverage.

The sterile nutritional liquid is preferably shelf-stable, meaning that is has a shelf-life at 25 degrees C of at least 2 months, more preferably at least 6 month, and that it does not form gel during storage at 25 degrees C for at least 2 months, more preferably for at least 6 months.

The nutritional liquid in general, and particularly the sterile nutritional liquid, preferably contain a limited amount insoluble protein matter as such insoluble protein matter tend to settle to the bottom of its container over time and form an undesirable protein sediment layer.

In some preferred embodiments of the invention the nutritional liquid has a content of insoluble protein matter of at most 20%, more preferably at most 10%, even more preferably at most 5%, and most preferably at most 1%. It is even more preferred that the nutritional liquid has no detectable insoluble protein matter.

The present inventors have found that the plasmin content of the nutritional liquid, and particularly the sterile nutritional liquid, preferably should be low to avoid undesirable protein degradation.

In some preferred embodiments of the invention, the combined activity of plasmin and plasminogen of the nutritional liquid, and particularly of the sterile nutritional liquid, is at most 8000 microUnits/mL, preferably at most 5000 microUnits/mL and even more preferably at most 3000 microUnits/mL.

In the context of the present invention, a plasmin activity of one Unit (U) is the plasmin activity which can produce 1 micromol p-Nitroaniline per minut at 25 degrees C, pH 8.9, using Chromozyme PL (Tosyl-Gly-Pro-Lys-4-nitranilide acetat) as substrate.

In other preferred embodiments of the invention, the combined activity of plasmin and plasminogen of the nutritional liquid, and particularly of the sterile nutritional liquid, is at most 2.500 microUnits/mL, preferably at most 1000 microUnits/mL and even more preferably at most 500 microUnits/mL. It may even be preferred that the combined activity of plasmin and plasminogen of the of the nutritional liquid, and particularly of the sterile nutritional liquid, is at most 100 microUnits/mL, preferably at most 50 microUnits/mL, and even more preferably at most 10 microUnits/mL.

The nutritional liquid is preferably homogenous meaning that at least the catechin compounds and the milk protein, preferably all ingredients, have been thoroughly mixed and are evenly distributed throughout the nutritional liquid when inspected visually, i.e. by eye.

In some preferred embodiments of the invention the nutritional liquid is a packaged, nutritional liquid, i.e. packaged in a suitable container. It is particularly preferred that the nutritional liquid is a sterile, packaged nutritional liquid.

Preferred examples of suitable contains are e.g. bottles, cartons, bricks, and/or bags.

In some preferred embodiments of the invention the nutritional liquid is obtainable by the method described herein.

In some preferred embodiments of the invention, the nutritional liquid has a pH in the range of 6.0-7.5, more preferably 6.0-7.0 and comprises:

- a content of total protein of 10-20% w/w, more preferably 12-18% w/w
- micellar casein in an amount of 50% to less than 70% w/w relative to total protein, more preferably 50%-69% w/w,
- an energy content of 0.4-1.5 kcal/g, more preferably 0.5.-1.0 kcal/g,
 and

 the nutritional liquid having a weight ratio between:

- epigallocatechin 3-gallate, and
- total protein

 in the range of 0.005-0.2, more preferably 0.01-0.15.

In some preferred embodiments of the invention, the nutritional liquid has a pH in the range of 6.0-7.5, more preferably 6.0-7.0 and comprises:

- a content of total protein of 10-20% w/w, more preferably 12-18% w/w
- micellar casein in an amount of 50% to less than 70% w/w relative to total protein, more preferably 50%-69% w/w,
- an energy content of 1.6-3.0 kcal/g, more preferably 2.0-2.8 kcal/g,
 and

 the nutritional liquid having a weight ratio between:

- epigallocatechin 3-gallate, and
- total protein

 in the range of 0.005-0.2, more preferably 0.01-0.15.

Yet an aspect of the invention pertains to a nutritional powder comprising, and possibly even consisting of, the solids of the nutritional liquid as defined herein and water in an amount of at most 10% w/w.

In some preferred embodiments of the invention the nutritional powder comprises the solids of the nutritional liquid as defined herein in an amount of at least 90% w/w, more preferably at least 94% w/w, even more preferably at least 95% w/w, and most preferably at least 96% w/w.

Preferably, the nutritional powder comprises water in an amount of at most 6% w/w, more preferably at most 5% w/w, and most preferably at most 4% w/w.

While the nutritional powder can be produced in a number of different ways it is obtainable by drying a nutritional liquid described herein, e.g. by spray-drying or freeze drying.

Yet an aspect of the invention pertains to a method of producing a nutritional liquid, and preferably a heat-treated and/or sterile nutritional liquid, comprising the step of:

a) forming a liquid mixture by combining a polyphenol source comprising one or more of catechin, epicatechin, gallocatechin, epigallocatechin, catechin 3-gallate, epicatechin 3-gallate, gallocatechin 3-gallate, and epigallocatechin 3-gallate, a milk protein source and optionally other ingredients, said liquid mixture comprising

- a content of total protein of 10-25% w/w,and
- one or more of catechin, epicatechin, gallocatechin, epigallocatechin, catechin 3-gallate, epicatechin 3-gallate, gallocatechin 3-gallate, and epigallocatechin 3-gallate, and

wherein the liquid mixture has a weight ratio between:

- the sum of the amounts of catechin, epicatechin, gallocatechin, epigallocatechin, catechin 3-gallate, epicatechin 3-gallate, gallocatechin 3-gallate, and epigallocatechin 3-gallate, and
- total protein

in the range of 0.001-0.2, and wherein the nutritional liquid:

- comprises micellar casein in an amount of 50% to less than 70% w/w relative to total protein,or
- comprises:

- micellar casein in an amount of 50-90% w/w relative to total protein and
- caseinate in an amount of 1-40% w/w relative to total protein.

b) preferably, filling the liquid mixture into a suitable container.

In the context of the present invention the term "polyphenol source comprising one or more of catechin, epicatechin, gallocatechin, epigallocatechin, catechin 3-gallate, epicatechin 3-gallate, gallocatechin 3-gallate, and epigallocatechin 3-gallate" pertains to a composition that comprises at least one of the catechin compounds:

- catechin,
- epicatechin,
- gallocatechin,
- epigallocatechin,
- catechin 3-gallate,
- epicatechin 3-gallate,
- gallocatechin 3-gallate, and
- epigallocatechin 3-gallate

and which preferably contain a total amount of the above catechin compounds of at least 1% w/w relative to the total solids of the source.

In the context of the present invention the term "milk protein source" pertains to a composition that provides milk protein. In the present content "milk protein" contains at least micellar casein and may furthermore contain whey protein and/or caseinates.

In the context of the present invention the term "liquid mixture" pertains to an edible aqueous liquid comprising the milk protein source and the source of one or more catechin compounds mentioned above.

The compositional features and embodiments described in the context of the nutritional liquid equally apply to the liquid mixture.

In some preferred embodiments of the invention where no heat-treatments are applied, the nutritional liquid is liquid mixture obtained from step a).

However in other preferred embodiments of the invention the nutritional liquid is the liquid mixture which has been subjected to heat-treatment and preferably has been sterilised.

In some preferred embodiments of the invention the method involves the filling of step b).

However, in other preferred embodiments of the invention the method comprises step a) without step b). Such embodiments are e.g. useful when the nutritional liquid is an intermediary product that is used for production of other food products.

In some preferred embodiments of the invention the liquid mixture is subjected to heat-treatment.

In some preferred embodiments of the invention the liquid mixture is:

- subjected to heat-treatment, preferably sterilising heat-treatment, prior to filling, or
- subjected to heat-treatment, preferably sterilising heat-treatment, after it has been filled into the container, or
- formed by aseptically mixing two or more sterile compositions containing the sources and optional ingredients of the liquid mixture.

It is preferred that the heat-treated, liquid mixture is the heat-treated, nutritional liquid.

In some preferred embodiments of the invention the polyphenol source comprising one or more of catechin, epicatechin, gallocatechin, epigallocatechin, catechin 3-gallate, epicatechin 3-gallate, gallocatechin 3-gallate, and epigallocatechin 3-gallate comprises or even consists of a vegetable extract.

Preferably, the polyphenol source comprises epigallocatechin 3-gallate. More preferably, the polyphenol source comprises epigallocatechin 3-gallate and epigallocatechin. Even more preferably the polyphenol source comprises epigallocatechin 3-gallate, epigallocatechin, and epicatechin.

It is particularly preferred that the vegetable extract is a polyphenol extract from tea leaves or cocoa beans, or a combination thereof.

In some preferred embodiments of the invention the polyphenol extract is from tea leaves, preferably from white tea, green tea or black tea or a combination thereof.

In some preferred embodiments of the invention the polyphenol source comprises a total amount of catechin, epicatechin, gallocatechin, epigallocatechin, catechin 3-gallate, epicatechin 3-gallate, gallocatechin 3-gallate, and epigallocatechin 3-gallate of at least 20% w/w, preferably at least 40% w/w, more preferably at least 60% w/w, even more preferably at least 80% w/w, and most preferably at least 90% w/w.

In other preferred embodiments of the invention the polyphenol source comprises a total amount of epigallocatechin 3-gallate of at least 20% w/w, preferably at least 40% w/w, more preferably at least 60% w/w, even more preferably at least 80% w/w, and most preferably at least 90% w/w.

In some preferred embodiments of the invention the milk protein source comprises one or more the following: a liquid micellar casein isolate, a micellar casein isolate powder, a liquid milk protein concentrate, a milk protein concentrate powder, a liquid skimmed milk, a skimmed milk powder, a liquid whey protein concentrate, a whey protein concentrate powder, and whey powder.

In some preferred embodiments of the invention the milk protein source comprises or essentially consists of a liquid micellar casein isolate, a micellar casein isolate powder, or a combination thereof.

The present invention advantageously enables the production and easy handling of nutritional liquids having high protein content.

In some preferred embodiments of the invention the total amount of protein of the liquid mixture is at least 10% w/w, more preferably at least 12% w/w, even more preferably at least 14% w/w and most preferably at least 16% w/w.

In some preferred embodiments of the invention the total amount of protein of the liquid mixture is in range of 10-24% w/w, more preferably 10-22% w/w, even more preferably 12-21% w/w and most preferably 14-20% w/w.

In other preferred embodiments of the invention the total amount of protein of the liquid mixture is in range of 10-20% w/w, more preferably 11-19% w/w, even more preferably 12-18% w/w and most preferably 13-19% w/w.

The inventor has found that nutritional liquids containing between 50% up to less than 70% micellar casein relative to total protein often are preferred, and the reduced content of micellar casein leave more freedom to optimize the nutritional benefits of the protein fraction of the nutritional liquid.

In some particularly preferred embodiments of the present invention, the liquid mixture comprises micellar casein in an amount of 50% to less than 70% w/w relative to total protein.

Preferably, the liquid mixture comprises micellar casein in an amount of 50-69% w/w relative to total protein, more preferably 50-68% w/w relative to total protein, even more preferably 51-67% w/w relative to total protein, and most preferably 52-66% w/w.

The liquid mixture may also contain whey protein and it is preferred that a significant amount of the non-casein protein is whey protein.

The source of whey protein, and therefore the liquid mixture, may e.g. contain native, non-native, and/or aggregated whey proteins. Sources of microparticulated whey protein, e.g. according to WO2015059243 or WO2015059248A1, and/or source of whey protein micelles according to WO2007110411 A2 or whey protein nanogels according to WO2021136785A1, and sources of native whey protein, such as native whey protein concentrates or native whey protein isolates, are preferred.

The source of micellar casein typically contributes with some whey protein too, typically substantially native whey protein.

In some preferred embodiments of the invention whey protein provides at least 20% w/w of the total protein of the liquid mixture that is not micellar casein, more preferably at least 40% w/w, of the total protein that is not micellar casein.

In some preferred embodiments of the invention the protein of the liquid mixture is milk protein, i.e. protein derived from milk or milk fractions such as e.g. whey.

It is often preferred that the liquid mixture comprises micellar casein and whey protein in a combined amount of at least 55% w/w relative to total protein, more preferably at least 60% w/w, even more preferably at least 70% w/w, and most preferably at least 80% w/w. Preferably, the liquid mixture comprises micellar casein and whey protein in a combined amount of at least 85% w/w relative to total protein, more preferably at least 88% w/w, even more preferably at least 90% w/w, and most preferably at least 95% w/w.

In some preferred embodiments of the present invention, the liquid mixture comprises whey protein in an amount of 1-50% w/w relative to total protein, more preferably 5-45% w/w, even more preferably 10-40% w/w, and most preferably 15-35% w/w.

In other preferred embodiments of the present invention, the liquid mixture comprises whey protein in an amount of 20-50% w/w relative to total protein, more preferably 25-45% w/w, even more preferably 30-40% w/w, and most preferably 25-35% w/w.

In some preferred embodiments of the present invention, the liquid mixture comprises:

- micellar casein in an amount of 50-69% w/w relative to total protein, more preferably 51-69% w/w, even more preferably 52-60% w/w, and most preferably 53-60% w/w and
- whey protein in an amount of 20-50% w/w relative to total protein, more preferably 25-45% w/w, even more preferably 30-40% w/w, and most preferably 25-35% w/w.

In some preferred embodiments of the present invention, the liquid mixture comprises micellar casein and caseinate in a combined amount of at least 85% w/w relative to total protein, more preferably at least 88% w/w, even more preferably at least 90% w/w, and most preferably at least 95% w/w.

For example, in some embodiments of the present invention, the liquid mixture comprises caseinate in an amount of 1-50% w/w relative to total protein, more preferably 5-45% w/w, even more preferably 10-40% w/w, and most preferably 15-35% w/w.

The liquid mixture may e.g. comprise caseinate in an amount of 20-50% w/w relative to total protein, more preferably 25-45% w/w, even more preferably 30-40% w/w, and most preferably 25-35% w/w.

The inventor has found that it is often preferred to keep the caseinate content low, and in some preferred embodiments of the invention, liquid mixture comprises caseinate in an amount of 0-15% w/w relative to total protein, more preferably 0.1-10% w/w, even more preferably 0.1-7% w/w, and most preferably 0.1-4% w/w. It may even be preferred that the liquid mixture does not comprise caseinate.

In some preferred embodiments of the present invention, the liquid mixture comprises:

- micellar casein in an amount of 50-90% w/w relative to total protein, more preferably 50-80% w/w, even more preferably 50-70% w/w, and most preferably 50-75% w/w, and
- caseinate in an amount of 1-40% w/w relative to total protein, more preferably 1-30% w/w, even more preferably 1-20% w/w, and most preferably 1-10% w/w.

The inventor has found that for caseinate-containing liquid mixture, it is often advantageous that the preparation of the liquid mixture involves mixing micellar casein with the polyphenol source comprising the specific catechin compound(s) prior to the addition of caseinate. The mixing of micellar casein and the polyphenol source comprising the specific catechin compound(s) is preferably performed in an aqueous liquid.

In some preferred embodiments of the present invention, if the liquid mixture contains caseinate in an amount of 1-40% w/w relative to total protein, more preferably 5-40% w/w, even more preferably 10-40% w/w, and most preferably 15-40% w/w relative to total protein, the preparation of the liquid mixture involves mixing micellar casein with the polyphenol source comprising the specific catechin compound(s) prior to the addition of caseinate. The mixing of micellar casein and the polyphenol source comprising the specific catechin compound(s) is preferably performed in an aqueous liquid.

In further preferred embodiments of the present invention, the preparation of the liquid mixture involves mixing micellar casein with the polyphenol source comprising the specific catechin compound(s) prior to the addition of other optional protein sources. The mixing of micellar casein and the catechin compound source is preferably performed in an aqueous liquid.

In other embodiments of the invention the liquid mixture also comprises non-milk protein such as e.g. vegetable protein, egg protein, a hydrolysate of caseinate, a hydrolysate of whey protein, or any combination thereof.

The liquid mixture often contains carbohydrate in addition to protein. In some preferred embodiments of the invention the liquid mixture has a total amount of carbohydrates of at least 5% w/w, more preferably at least 7% w/w, even more preferably at least 10% w/w, and most preferably at least 15% w/w.

In some preferred embodiments of the invention the liquid mixture has a total amount of carbohydrates in the range of 5-25% w/w, more preferably, 7-22% w/w, even more preferably 10-20% w/w, and most preferably 12-18% w/w.

However, for some applications it is preferred that the content of carbohydrate is kept low, e.g. to reduce the caloric content of the liquid. Thus, in other preferred embodiments of the invention the liquid mixture has a total amount of carbohydrates of at most 4%w/w, more preferably at most 2% w/w, even more preferably at most 0.5% w/w, and most preferably at most 0.1% w/w.

It may also be preferred that the liquid mixture has a very low content of lactose, particularly if the liquid mixture is intended for subjected with lactose-intolerance. Thus, in some preferred embodiments of the invention the liquid mixture has a total amount of lactose of at most 1%w/w, more preferably at most 0.1% w/w, even more preferably at most 0.01% w/w, and most preferably at most 0.001% w/w.

Non-limiting examples of useful carbohydrates are edible mono-, di-, oligo- and/or polysaccharides, such as e.g. glucose, galactose, fructose, arabinose, ribose, tagatose, sucrose, maltose, maltriose, maltodextrin, fructo oligosaccharides , galacto oligosaccharides, and combinations thereof.

The liquid mixture often contains lipid, and for some nutritional applications the presence of lipid is advantageous. In some preferred embodiments of the invention the liquid mixture has a total amount of lipid of at least 2%w/w, more preferably at least 5% w/w, even more preferably at least 8% w/w, and most preferably at least 10% w/w.

In some preferred embodiments of the invention the liquid mixture has a total amount of lipid in the range of 2-20% w/w, more preferably, 5-18% w/w, even more preferably 8-15% w/w, and most preferably 10-14% w/w.

In some embodiments the amount of lipid of the liquid mixture may range between 5 and 95%, preferably between 10 and 70%, more preferably between 20 and 40%, relative to the total energy content of the liquid mixture.

With regard to the type of lipid, a wide choice is possible, as long as the lipid is of food quality. The lipid may either be an animal lipid or a vegetable lipid or both. Although animal lipids such as lard or butter have essentially equal caloric and nutritional values and can be used interchangeably, vegetable oils are highly preferred in the practice of the present invention due to their readily availability, ease of formulation, absence of cholesterol and lower concentration of saturated fatty acids. In one embodiment, the present composition comprises rapeseed oil, corn oil and/or sunflower oil.

The lipid may include a source of medium chain fatty acids, such as medium chain triglycerides (MCT, mainly 8 to 10 carbon atoms long), a source of long chain fatty acids, such as long chain triglycerides (LCT) and phospholipid-bound fatty acids such as phospholipid-bound EPA or DHA, or any combination of the two types of sources. MCTs are beneficial because they are easily absorbed and metabolized in a metabolically-stressed patient. Moreover, the use of MCTs will reduce the risk of nutrient malabsorption. LCT sources, such as canola oil, rapeseed oil, sunflower oil, soybean oil, olive oil, coconut oil, palm oil, linseed oil, marine oil or corn oil are beneficial because it is known that LCTs may modulate the immune response in the human body.

In some embodiments, the lipid comprises 30 to 60 weight % of animal, algal or fungal fat, 40 to 70 weight % of vegetable fat and optionally 0 to 20 weight % of MCTs based on total fat of the composition. The animal fat preferably comprises a low amount of milk fat, i.e. lower than 6 weight %, especially lower than 3 weight % based on total fat. In particular, a mixture of corn oil, egg oil, and/or canola oil and specific amounts of marine oil is used. Egg oils, fish oils and algal oils are a preferred source of non-vegetable fats. Especially for compositions that are to be consumed orally, in order to prevent formation of off-flavours and to decrease a fishy aftertaste, it is recommended to select ingredients that are relatively low in docosahexaenoic acid (DHA), i.e. less than 6 weight %, preferably less than 4 weight % based on total fat. Marine oils containing DHA are preferably present in the composition according to the invention in an amount lower than 25 weight %, preferably lower than 15 weight % based on total fat. On the other hand, inclusion of eicosapentaenoic acid (EPA) is highly desirable for obtaining the maximum health effect. Therefore, in another embodiment, the amount of EPA may range between 4 weight % and 15 weight %, more preferably between 8 weight % and 13 weight % based on total fat. The weight ratio EPA:DHA is advantageously at least 6:4, for example between 2:1 and 10:1. In yet another embodiment, the amount of EPA is very low, such as 0.1 to 1 weight %, preferably 0.3 weight % or 0.6 weight %, based on total lipid.

Also, the nutritional liquid according to the invention may beneficially comprise an emulsifier. Commonly known emulsifiers may be used and generally the emulsifier contributes to the energy content of the lipid in the liquid mixture.

In other preferred embodiments of the invention, e.g. for sports nutrition, the liquid mixture has a the total amount of lipid of at most 1%w/w, more preferably at most 0.3% w/w, even more preferably at most 0.1% w/w, and most preferably at most 0.01% w/w.

The nutritional liquid according to the invention may be is designed to either supplement a person's diet or to provide complete nutritional support. Hence, the liquid mixture according to the invention may further comprise at one or more nutritional components such as vitamins, minerals, trace elements and/or a source of indigestible carbohydrates. Preferably, the liquid mixture according the invention is a nutritionally complete liquid mixture.

The liquid mixture may contain a variety of vitamins, minerals and trace elements.

In some preferred embodiments of the invention the liquid mixture comprises sodium in an amount in the range of 10-200 mg/100 mL, more preferably 30-120 mg/100 mL, even more preferably 50-90 mg/100 mL, and most preferably 60-75 mg/100 mL.

In some preferred embodiments of the invention the liquid mixture comprises potassium in an amount in the range of 10-250 mg/100 mL, more preferably 40 -200 mg/100 mL, even more preferably 120-175 mg/100 mL, and most preferably 155-165 mg/100 mL.

In some preferred embodiments of the invention the liquid mixture comprises chlorine in an amount in the range of 10-200 mg/100 mL, more preferably 50-150 mg/100 mL, even more preferably 60-100 mg/100 mL, and most preferably 75-85 mg/100 mL.

In some preferred embodiments of the invention the liquid mixture comprises calcium in an amount in the range of 50-700 mg/100 mL, more preferably 150-500 mg/100 mL, even more preferably 180-300 mg/100 mL, and most preferably 200-220 mg/100 mL.

The present inventors have seen indications that the catechin compounds enables the production of nutritional liquids having a relatively high calcium content which often is advantageous from a nutritional perspective and required if the liquid liquids should be nutritionally complete. Thus, in some preferred embodiments of the invention the liquid mixture comprises calcium in an amount in the range of 150-700 mg/100 mL, more preferably 170-500 mg/100 mL, even more preferably 200-400 mg/100 mL, and most preferably 240-300 mg/100 mL.

In some preferred embodiments of the invention the liquid mixture comprises magnesium in an amount in the range of 5-100 mg/100 mL, more preferably 10-25 mg/100 mL, even more preferably 12-20 mg/100 mL, and most preferably 14-18 mg/100 mL.

In some preferred embodiments of the invention the liquid mixture comprises phosphorus in an amount in the range of 50-500 mg/100 mL, more preferably 70-300 mg/100 mL, even more preferably 90-200 mg/100 mL, and most preferably 100-150 mg/100 mL.

In some preferred embodiments of the invention the liquid mixture comprises iron in an amount in the range of 0.1-20 mg/100 mL, more preferably 0.5-10 mg/100 mL, even more preferably 1-5 mg/100 mL, and most preferably 2-3 mg/100 mL.

In some preferred embodiments of the invention the liquid mixture comprises zinc in an amount in the range of 0.1-10 mg/100 mL, more preferably 0.5-5 mg/100 mL, even more preferably 0.7-3 mg/100 mL, and most preferably 1-2 mg/100 mL.

In some embodiment of the present invention, the liquid mixture according to the invention provides all necessary vitamins, most of the minerals and trace elements. For example, the liquid mixture according to the invention preferably provides 6 mg of zinc per 100 ml of the liquid mixture which is beneficial for tissue repair in a healing patient. Preferably, the liquid mixture according to the invention (also) provides 25 mg of vitamin C per 100 ml of the liquid mixture to aid patients with more severe healing requirements. Further, preferably, the liquid mixture according to the invention (also) provides 2.25 mg iron per 100 ml of the liquid mixture. Iron is beneficial in maintaining bodily fluids as well as circulatory system functions in an elderly patient.

The invention implicates that a nutritional liquid according to the present invention may contain sodium and/or potassium levels outside FSMP (Foods for Special Medical Purposes) legislation levels.

The liquid mixture may furthermore contain suitable food acids and/or food alkalizing agents.

In some preferred embodiments of the invention, the liquid mixture comprises one or more non-polyphenol chelating agents, e.g. selected from the group consisting of a phosphoric acid, citric acid, a soluble phosphate salt, a soluble citrate salt, or a mixture thereof.

In some preferred embodiments of the invention the liquid mixture comprises one or more non-polyphenol chelating agents selected from the group consisting of a phosphoric acid, a soluble phosphate salt, or a mixture thereof.

According to one embodiment, the phosphoric acid is selected from the group consisting of uridine monophosphoric acid, cytidine monophosphoric acid, orthophosphoric acid, inositol hexa-phosphoric acid, hexametaphosphoric acid, or a mixture thereof, and the phosphate salt is selected from the group consisting of uridine monophosphate, cytidine monophosphate, orthophosphate, inositol hexaphosphate, hexametaphosphate, or a mixture thereof.

If used, the non- polyphenol chelating agent should preferably be added in an amount of 1 to 120 mEq/L of said chelating agent, preferably 5 to 100 mEq/L, more 10 to 80 mEq/L, most preferably 20 to 60 mEq/L.

In some preferred embodiments of the invention the liquid mixture comprises an amount of lactic acid in an amount between 0.05 and up to 1.5 g/100 mL.

Preferably, the liquid mixture of the invention comprises lactic acid in an amount between 0.05 and 1.0 g/100 ml, more preferably between 0.1 and 1.0 g/100ml, most preferably between 0.2 and 0.5 g/100ml of the liquid mixture.

The amount of lactic acid may be linked to the protein content of the product. In some preferred embodiments of the invention the amount of lactic acid is up to 250mg/g protein. More preferably, the amount of lactic acid lies between 1 and 200 mg per gram protein of the total liquid mixture, preferably between 2.5 and 100 mg/g protein, more preferably between 5 and 75 mg/g protein, most preferably between 10 and 75 mg lactic acid, per gram protein of the liquid mixture.

Alternatively, the liquid mixture of the invention may comprise an amount of lactic acid up to 400 mg/g micellar casein of the total liquid mixture. More preferably, the amount of lactic acid lies between 4 and 300 mg/g protein, more preferably between 10 and 200 mg/g micellar casein, most preferably between 20 and 100 mg lactic acid per g micellar casein of the liquid mixture.

In a preferred embodiment, the liquid mixture of the present invention comprises citrate, preferably in an amount up to 1 g/100 mL, preferably in an amount between 1 mg and 500 mg/100 mL, more preferably in an amount between 5 mg and 400 mg/100 mL, more preferably in an amount between 10 mg and 300 mg/100 mL, most preferably in an amount of 15 mg and 100 mg/100 mL of the liquid mixture. It may be beneficial to include a certain amount of citrate in the liquid mixture of the invention for prolonged heat-stability and shelf-life.

In some preferred embodiments of the invention, the liquid mixture comprises a combination of citric acid and lactic acid. The combined amount thereof is preferably up to 2.5 g/100 mL, more preferably this combined amount lies between 0.05 and 2 g/100mL, more preferably between 0.1 and 1.5 g/100mL, even more preferably between 0.25 and 1.0 g/100mL, most preferably between 0.3 and 0.75 g/100mL.

In case lactic acid an citric are both present, the weight amount of lactic acid preferably exceeds the weight amount of citrate, preferably by a factor 1.1 to 20, more preferably by a factor 2 to 18, more preferably a factor 3 to 15 or most preferably 4 to 12. At such ratios, viscosity of the nutritional liquid is kept low, while other parameters, such as shelf-life and heat-stability influenced by the presence of citric acid, are kept at sufficient levels.

While both non-polyphenol chelating agents and lactic acid may be preferred in some embodiments of the invention the inventors have found that they surprisingly are not necessary when the liquid mixture contains catechin-compounds as described herein.

Thus, in some preferred embodiments of the invention the liquid mixture contains at most 0.1 g lactic acid/100 mL, more preferably at most 0.04 g lactic acid/100 mL, even more preferably at most 0.01 g lactic acid/100 mL and most preferably at most 0.001 g lactic acid/100 mL.

In some preferred embodiments of the invention the liquid mixture contains non-polyphenol chelating agents in an amount of at most 5 mEq/L, more preferably at most 1 mEq/L, even more preferably at most 0.4 mEq/L and most preferably at most 0.1 mEq/L.

In some preferred embodiments of the invention the liquid mixture contains a total amount of non-polyphenol chelating agents selected from phosphoric acid, citric acid, a soluble phosphate salt, a soluble citrate salt in an amount of at most 5 mEq/L, more preferably at most 1 mEq/L, even more preferably at most 0.4 mEq/L and most preferably at most 0.1 mEq/L.

The present invention is particularly useful for high solids nutritional liquids.

In some preferred embodiments of the invention the liquid mixture has a content of total solids in the range of 9-50% w/w; more preferably in the range of 10-40% w/w, even more preferably in the range of in the range of 12-35% w/w, and even more preferably in the range of 16-30% w/w.

In other preferred embodiments of the invention the liquid mixture has a content of total solids in the range of 20-50% w/w; more preferably in the range of 24-48% w/w, even more preferably in the range of in the range of 28-45% w/w, and even more preferably in the range of 30-43% w/w. These embodiments are particularly useful for nutritionally complete nutritional liquids.

In some preferred embodiments of the invention the liquid mixture has an energy content of 1-3 kcal/g, more preferably 1.5-3.0 kcal/g, and even more preferably 2.0-2.8 kcal/g.

In other preferred embodiments of the invention the liquid mixture has an energy content of at most 1 kcal/g, more preferably at most 0.8 kcal/g, and even more preferably at most 0.5 kcal/g.

The liquid mixture preferably has a water content of at least 50% w/w, more preferably at least 60% w/w, even more preferably at least 65% w/w, and most preferably at least 70% w/w.

Even higher water contents may be preferred, thus in some preferred embodiments of the invention the liquid mixture has a water content of at least 75% w/w, more preferably at least 80% w/w, even more preferably at least 85% w/w, and most preferably at least 90% w/w.

In some preferred embodiments of the invention the liquid mixture has a water content in the range of 50-91% w/w; more preferably in the range of 60-90% w/w, even more preferably in the range of in the range of 65-88% w/w, and most preferably in the range of 70-84% w/w.

In some preferred embodiments of the invention the liquid mixture has a pH in the range of 6.0-8.0, more preferably 6.2-7.5, even more preferably 6.4-7.1, and most preferably 6.5-7.0.

In other preferred embodiments of the invention the liquid mixture has a pH in the range of 6.0-8.0, more preferably 6.0-7.5, even more preferably 6.0-7.1, and most preferably 6.0-7.0. The present inventors have found that the combination of the catechin compounds and protein colours the liquid mixture intensely red at e.g. pH 7.3 that that the intensity can be reduced by lowering the pH. The present inventors have also seen indications that the colour problem can be reduced by increasing the amount of casein relative to total protein.

An advantage of the present invention is that the viscosity immediately after production of the liquid mixture is reduced significantly if polyphenol is present. This discovery eases the production of the liquid mixture and makes it more suitable for drinking. The need for technical solutions that keep the viscosity relatively low is particularly pronounce for producing high protein beverage and even more particularly for producing high protein, high calorie beverages.

In some preferred embodiments of the invention the liquid mixture has a viscosity of at most 400 cP at a temperature of 20 degrees C and a shear rate of 145 s$^{-1}$, preferably at most 200 cP, more preferably at most 100 cP, even more preferably at most 50 cP and most preferably at most 30 cP.

For example, the liquid mixture may have a viscosity in the range of 2-400 cP at a temperature of 20 degrees C and a shear rate of 145 s$^{-1}$, preferably 4-200 cP, more preferably 5-100 cP, even more preferably 6-50 cP, and most preferably 7-30 cP.

In some preferred embodiments of the invention the liquid mixture has a viscosity of at most 400 cP at a temperature of 5 degrees C and a shear rate of 145 s$^{-1}$, preferably at most 200 cP, more preferably at most 100 cP, even more preferably at most 50 cP and most preferably at most 30 cP.

The liquid mixture may e.g. have a viscosity in the range of 2-400 cP at a temperature of 5 degrees C and a shear rate of 145 s$^{-1}$, preferably 4-200 cP, more preferably 5-100 cP, even more preferably 6-50 cP, and most preferably 7-30 cP.

An advantageous feature of the present liquid mixture is that it is not prone to cold gelation not prone and stays liquid and hence drinkable even after prolonged storage a low temperature.

Thus, in some preferred embodiments of the invention the liquid mixture has a viscosity after storage at 5 degrees C for 63 days in the range of 2-400 cP at a temperature of 5 degrees C and a shear rate of 145 s$^{-1}$, preferably 4-200 cP, more preferably 5-100 cP, even more preferably 6-50 cP, and most preferably 7-30 cP.

It is particularly preferred that the liquid mixture is a sterile liquid mixture, and more preferably a heat-sterilised liquid mixture.

The liquid mixture in general, and particularly the sterile liquid mixture, preferably contain a limited amount insoluble protein matter as such insoluble protein matter tend to settle to the bottom of its container over time and form an undesirable protein sediment layer.

In some preferred embodiments of the invention the liquid mixture has a content of insoluble protein matter of at most 20%, more preferably at most 10%, even more preferably at most 5%, and most preferably at most 1%. It is even more preferred that the liquid mixture has no detectable insoluble protein matter.

The present inventors have found that the plasmin content of the nutritional liquid, and particularly the sterile nutritional liquid, preferably should be low to avoid undesirable protein degradation.

In some preferred embodiments of the invention, the combined activity of plasmin and plasminogen of the liquid mixture, and particularly of the sterile liquid mixture, is at most 8000 micro-Units/mL, preferably at most 5000 micro-Units/mL and even more preferably at most 3000 microUnits/mL.

In other preferred embodiments of the invention, the combined activity of plasmin and plasminogen of the liquid mixture, and particularly of the sterile liquid mixture, is at most 2.500 micro-Units/mL, preferably at most 1000 micro-Units/mL and even more preferably at most 500 micro-Units/mL. It may even be preferred that the combined activity of plasmin and plasminogen of the of the liquid mixture, and particularly of the sterile liquid mixture, is at most 100 micro-Units/mL, preferably at most 50 microUnits/mL, and even more preferably at most 10 micro-Units/mL.

The liquid mixture is preferably homogenous meaning that at least the catechin compounds and the milk protein, preferably all ingredients, have been thoroughly mixed and are evenly distributed throughout the liquid mixture when inspected visually, i.e. by eye.

The liquid mixture comprising the polyphenol source and the milk protein source may be formed by combining the sources and optional ingredients in a number of different ways.

In some preferred embodiments of the invention the liquid mixture is formed by aseptically mixing two or more sterile compositions containing the sources and optional ingredients of the liquid mixture. For example, it may be preferred that a first sterile composition may comprise or even consist of the polyphenol source and a second sterile composition may comprise of even consist of the milk protein source. In some preferred embodiments of the invention the first sterile composition is mixture of the polyphenol source and one or more optional ingredients. In some preferred embodiments of the invention the second sterile composition is a mixture of the milk protein source and one or more optional ingredients.

In other preferred embodiments of the invention the first sterile composition is a mixture comprising the polyphenol source and the milk protein source and the second sterile composition comprises one or more optional ingredients.

Even further sterile compositions may be aseptically mixed to form the liquid mixture, such as e.g. a third sterile composition, fourth sterile composition and a fifth sterile composition. Such furthermore sterile compositions typically comprise or even consist of one or more optional ingredients.

In other preferred embodiments of the invention the combining involves directly combining all sources and other optional ingredients and subsequently mixing these.

In some preferred embodiments of the invention the combining of step a) involves making a pre-blend of some of the sources and other optional ingredients and subsequently mixing the pre-blend with the remaining source(s) and/or optional ingredient(s).

It is generally preferred that at least the polyphenol source and the milk protein source comprising casein micelles, and preferably all the ingredients of the liquid mixture, are thoroughly mixed to ensure a uniform dispersion of the different components of the liquid mixture.

It is furthermore preferred that the catechin compounds of the polyphenol source and the casein micelles of the milk protein source are given time to interact, for example from few hours to less than a second. The inventors have found that homogenisation, preferably combined with heating, favours up the interaction between catechin compounds and casein micelles.

In some preferred embodiments of the invention, the method of the present invention does not contain a filling step and in these embodiments the nutritional liquid obtained from the method is typically used for producing a food product.

However, in other preferred embodiments of the invention the method of the invention comprises a filling step wherein liquid mixture is filled into a suitable container which then is sealed. This is particularly preferred where the nutritional liquid is the end-product that the consumer will comsume, such as e.g. a beverage product.

In some preferred embodiments of the invention the nutritional liquid is a beverage product.

In some preferred embodiments of the invention the filling is aseptic filling, which preferably involves aseptically filling the sterile liquid mixture in a sterile container and sealing the container aseptically so the liquid mixture remains sterile. Sterilising heat-treatment of the liquid mixture is preferably followed by aseptic filling and may e.g. involve aseptic homogenisation after the sterilizing heat-treatment but prior to the aseptic filling.

In other preferred embodiments of the invention the filling is not necessarily aseptic. In such embodiments it is preferred that the containers containing the nutritional liquid are either kept at refrigeration temperature (at least 6 degrees C) or are subjected to retort-type heat-sterilisation.

The present inventors have found that addition of catechin-compounds to a liquid containing a high concentration of micellar casein leads to a drop in viscosity and tendency to form gel upon cooling, even without heat-treatment.

However, in some preferred embodiments of the invention the method involves subjecting the liquid mixture to a heat-treatment.

In some preferred embodiments of the invention the heat-treatment involves that the liquid mixture is heated to a temperature in the range of 70-180 degrees C, more preferably in the range of 100-170 degrees C, and even more preferably 120-160 degrees C and most preferably in the range 140-150 degrees C, which is typical for UHT treatments.

In some preferred embodiments of the invention the duration of the heat-treatment is sufficient to provide a sterile liquid mixture. For example, it is often preferred that the liquid mixture is heated to a temperature in the range of 100-180 degrees C, more preferably in the range of 140-160 degrees C, for a duration sufficient to provide a sterile liquid mixture.

In some preferred embodiments of the invention the liquid mixture is heat-treated prior to filling, and preferably homogenized after this heat-treatment.

In some preferred embodiments of the invention the liquid mixture is heat-treated after filling, and preferably after sealing the container. This mode of heat-treatment is often referred to as retort heat-treatment.

In some preferred embodiments of the invention the liquid mixture is subjected to homogenization after the heat-treatment but prior to filling. In these embodiments it is preferred to perform the homogenisation under aseptic conditions to avoid contamination of the heat-treated liquid mixture. This is particularly advantageous for producing nutritional liquids that are ready-to-drink beverages having a long shelf-life at ambient temperature.

Alternatively or additionally the liquid mixture may be subjected to homogenisation prior to the heat-treatment.

Some preferred embodiments of the invention pertain to a method of producing a nutritional liquid having a pH of 6.0-7.5, more preferably 6.0-7.0 comprising the step of:

a) forming a liquid mixture having a pH of 6.0-7.5, more preferably 6.0-7.0 by combining a polyphenol source comprising one or more of catechin, epicatechin, gallocatechin, epigallocatechin, catechin 3-gallate, epicatechin 3-gallate, gallocatechin 3-gallate, and epigallocatechin 3-gallate, a milk protein source and optionally other ingredients, said liquid mixture comprising

- a content of total protein of 10-20% w/w, preferably 12-18% w/w
  and
- one or more of catechin, epicatechin, gallocatechin, epigallocatechin, catechin 3-gallate, epicatechin 3-gallate, gallocatechin 3-gallate, and epigallocatechin 3-gallate,

said liquid mixture having a weight ratio between:

- the sum of the amounts of catechin, epicatechin, gallocatechin, epigallocatechin, catechin 3-gallate, epicatechin 3-gallate, gallocatechin 3-gallate, and epigallocatechin 3-gallate, and

- total protein

in the range of 0.005-0.2, more preferably 0.01-0.15,
wherein the formation of the liquid mixture optionally involves at least one homogenization step, and
wherein the nutritional liquid is the liquid mixture obtained by step a).

According to the method of the present invention, said nutritional liquid:

- comprises micellar casein in an amount of 50% to less than 70% w/w relative to total protein, or
- comprises:

    - micellar casein in an amount of 50-90% w/w relative to total protein and
    - caseinate in an amount of 1-40% w/w relative to total protein.b) preferably, filling the liquid mixture into a suitable container.

The invention furthermore pertains to nutritional liquids obtainable by the above preferred embodiments.
Some preferred embodiments of the invention pertain to a method of producing a nutritional liquid having a pH of 6.0-7.5, more preferably 6.0-7.0 comprising the step of:

a) forming a liquid mixture having a pH of 6.0-7.5, more preferably 6.0-7.0 by combining a polyphenol source comprising one or more of catechin, epicatechin, gallocatechin, epigallocatechin, catechin 3-gallate, epicatechin 3-gallate, gallocatechin 3-gallate, and epigallocatechin 3-gallate, a milk protein source and optionally other ingredients, said liquid mixture comprising

- a content of total protein of 10-20% w/w, preferably 12-18% w/w
- micellar casein in an amount of 50% to less than 70% w/w relative to total protein, more preferably 50-69% w/w, and
- one or more of catechin, epicatechin, gallocatechin, epigallocatechin, catechin 3-gallate, epicatechin 3-gallate, gallocatechin 3-gallate, and epigallocatechin 3-gallate,

said liquid mixture having a weight ratio between:

- the sum of the amounts of catechin, epicatechin, gallocatechin, epigallocatechin, catechin 3-gallate, epicatechin 3-gallate, gallocatechin 3-gallate, and epigallocatechin 3-gallate, and
- total protein

in the range of 0.005-0.2, more preferably 0.01-0.15,
wherein the formation of the liquid mixture optionally involves at least one homogenization step, and
wherein the nutritional liquid is the liquid mixture obtained by step a).

The invention furthermore pertains to nutritional liquids obtainable by the preferred embodiments above.
Further preferred embodiments of the invention pertain to a method of producing a nutritional liquid having a pH of 6.0-7.5, more preferably 6.0-7.0 comprising the step of:

a) forming a liquid mixture having a pH of 6.0-7.5, more preferably 6.0-7.0 by combining a polyphenol source comprising epigallocatechin 3-gallate, a milk protein source and optionally other ingredients, said liquid mixture comprising

- a content of total protein of 10-20% w/w, preferably 12-18% w/w
- micellar casein in an amount of 50% to less than 70% w/w relative to total protein, more preferably 50-69% w/w, and
- epigallocatechin 3-gallate,

said liquid mixture having a weight ratio between:

- epigallocatechin 3-gallate, and
- total protein

in the range of 0.005-0.2, more preferably 0.01-0.15,

wherein the formation of the liquid mixture optionally involves at least one homogenization step, and

wherein the nutritional liquid is the liquid mixture obtained by step a).

The invention furthermore pertains to nutritional liquids obtainable by the preferred embodiments above.

Some preferred embodiments of the invention pertain to a method of producing a heat-treated, sterile nutritional liquid having a pH of 6.0-7.5, more preferably 6.0-7.0 comprising the step of:

a) forming a liquid mixture having a pH of 6.0-7.5, more preferably 6.0-7.0 by combining a polyphenol source comprising one or more of catechin, epicatechin, gallocatechin, epigallocatechin, catechin 3-gallate, epicatechin 3-gallate, gallocatechin 3-gallate, and epigallocatechin 3-gallate, a milk protein source and optionally other ingredients, said liquid mixture comprising

- a content of total protein of 10-20% w/w, preferably 12-18% w/w
- micellar casein in an amount of 50% to less than 70% w/w relative to total protein, more preferably 50-69% w/w, and
- one or more of catechin, epicatechin, gallocatechin, epigallocatechin, catechin 3-gallate, epicatechin 3-gallate, gallocatechin 3-gallate, and epigallocatechin 3-gallate,

said liquid mixture having a weight ratio between:

- the sum of the amounts of catechin, epicatechin, gallocatechin, epigallocatechin, catechin 3-gallate, epicatechin 3-gallate, gallocatechin 3-gallate, and epigallocatechin 3-gallate, and
- total protein

in the range of 0.005-0.2, more preferably 0.01-0.15,

b) filling the liquid mixture aseptically into a sterile container and sealing the container aseptically,

wherein the liquid mixture is subjected to a sterilising heat-treatment followed by an aseptic homogenisation prior to step b), and
wherein the nutritional liquid is the packaged, sterile liquid mixture obtained from step b).

The invention furthermore pertains to nutritional liquids obtainable by the preferred embodiments above.

Further preferred embodiments of the invention pertain to a method of producing a heat-treated, sterile nutritional liquid having a pH of 6.0-7.5, more preferably 6.0-7.0 comprising the step of:

a) forming a liquid mixture having a pH of 6.0-7.5, more preferably 6.0-7.0 by combining a polyphenol source comprising epigallocatechin 3-gallate, a milk protein source and optionally other ingredients, said liquid mixture comprising

- a content of total protein of 10-20% w/w, preferably 12-18% w/w
- micellar casein in an amount of 50% to less than 70% w/w relative to total protein, more preferably 50-69% w/w, and
- epigallocatechin 3-gallate,

said liquid mixture having a weight ratio between:

- epigallocatechin 3-gallate, and
- total protein

in the range of 0.005-0.2, more preferably 0.01-0.15,

b) filling the liquid mixture aseptically into a sterile container and sealing the container aseptically,

wherein the liquid mixture is subjected to a sterilising heat-treatment followed by an aseptic homogenisation prior to step b), and
wherein the nutritional liquid is the packaged, sterile liquid mixture obtained from step b).

The invention furthermore pertains to nutritional liquids obtainable by the preferred embodiments above.

Some preferred embodiments of the invention pertain to a method of producing a heat-treated, sterile nutritional liquid having a pH of 6.0-7.5 comprising the step of:

a) forming a liquid mixture having a pH of 6.0-7.5 by combining a polyphenol source comprising one or more of catechin, epicatechin, gallocatechin, epigallocatechin, catechin 3-gallate, epicatechin 3-gallate, gallocatechin 3-gallate, and epigallocatechin 3-gallate, a milk protein source and optionally other ingredients, said liquid mixture comprising

- a content of total protein of 12-25% w/w, more preferably 14-22% w/w
- micellar casein in an amount of 50% to less than 70% w/w relative to total protein, more preferably 50-69% w/w, and
- one or more of catechin, epicatechin, gallocatechin, epigallocatechin, catechin 3-gallate, epicatechin 3-gallate, gallocatechin 3-gallate, and epigallocatechin 3-gallate,

said liquid mixture having a weight ratio between:

- the sum of the amounts of catechin, epicatechin, gallocatechin, epigallocatechin, catechin 3-gallate, epicatechin 3-gallate, gallocatechin 3-gallate, and epigallocatechin 3-gallate, and
- total protein

in the range of 0.01-0.2, more preferably 0.02-0.15,

b) filling the liquid mixture aseptically into a sterile container and sealing the container aseptically,

wherein the liquid mixture is subjected to a sterilising heat-treatment, optionally followed by an aseptic homogenisation, prior to step b), and

wherein the nutritional liquid is the packaged, sterile liquid mixture obtained from step b).

The invention furthermore pertains to nutritional liquids obtainable by the preferred embodiments above.

Other preferred embodiments of the invention pertain to a method of producing a heat-treated, sterile nutritional liquid having a pH of 6.0-7.5 comprising the step of:

a) forming a liquid mixture having a pH of 6.0-7.5 by combining a polyphenol source comprising epigallocatechin 3-gallate, a milk protein source and optionally other ingredients, said liquid mixture comprising

- a content of total protein of 12-25% w/w, more preferably 14-22% w/w
- micellar casein in an amount of 50% to less than 70% w/w relative to total protein, more preferably 50-69% w/w, and
- one or more of catechin, epicatechin, gallocatechin, epigallocatechin, catechin 3-gallate, epicatechin 3-gallate, gallocatechin 3-gallate, and epigallocatechin 3-gallate,

said liquid mixture having a weight ratio between:

- the sum of the amounts of catechin, epicatechin, gallocatechin, epigallocatechin, catechin 3-gallate, epicatechin 3-gallate, gallocatechin 3-gallate, and epigallocatechin 3-gallate, and
- total protein

in the range of 0.01-0.2, more preferably 0.02-0.15,

b) filling the liquid mixture aseptically into a sterile container and sealing the container aseptically,

wherein the liquid mixture is subjected to a sterilising heat-treatment followed by an aseptic homogenisation prior to step b), and

wherein the nutritional liquid is the packaged, sterile liquid mixture obtained from step b).

The invention furthermore pertains to nutritional liquids obtainable by the preferred embodiments above.

Yet an aspect of the invention pertains to a nutritional liquid obtainable according to the method described herein, and preferably, said nutritional liquid obtainable by the method is a nutritional liquid as defined herein.

Yet an aspect of the invention pertains to the use of one or more of catechin, epicatechin, gallocatechin, epigallocatechin, catechin 3-gallate, epicatechin 3-gallate, gallocatechin 3-gallate, and epigallocatechin 3-gallate for:

- reducing or preventing cold gelation,
- reducing or preventing cold thickening and/or
- reducing the viscosity,

of a nutritional liquid having a pH in the range of 6-8 and comprising:

- protein in an amount of at least 10% w/w, and
- micellar casein in an amount of at least 70% w/w relative to total protein; or
- micellar casein in an amount of 50-90% w/w relative to total protein and
- caseinate in an amount of 1-40% w/w relative to total protein.

The reduced viscosity is preferably the viscosity immediately (i.e. at most 1 hour after) the nutritional liquid has been produced.

The reduction or prevention of cold thickening and/or cold gelation is preferably reduction or prevention at refrigeration temperature and more preferably at about 5 degrees C, and preferably upon storage at these temperatures.

The catechin compound(s) is (are) preferably used as ingredient(s) in the production of the nutritional liquid as described above.

The nutritional liquid is preferably a nutritional liquid as described herein.

The present invention has been described above with reference to specific embodiments. However, other embodiments than the above described are equally possible within the scope of the invention. The different features and steps of various embodiments and aspects of the invention may be combined in other ways than those described herein unless it is stated otherwise.

## EXAMPLES

**Methods of analysis**

Analysis 1: Determination total protein

The content of total protein (true protein) is determined according to Example 9.2 of WO 2018/115520.

Analysis 2: Determination of viscosity

The determination of viscosity is carried out using a stress-controlled rheometer Physica MCR 301 (Anton Paar, Graz, Austria) equipped with a Peltier temperature controller. The temperature is maintained at 5 degrees C or 20 degrees C by connecting the rheometer to an external water bath (F12, Julabo GmbH, Seelbach, Germany). All measurements are conducted at 5 degrees C or 20 degrees C and the samples are equilibrated at the measurement temperature in the rheometer for 5 minutes prior to initiation of the shearing and the measurement. The geometry used is a concentric cylinder measuring system (diameter: 27 mm).

All samples are subjected to a steady flow test (shear rate ramp from 0 to 1000 $s^{-1}$ over 11 minutes). The viscosity at shear rate 145 $s^{-1}$ is recorded as the viscosity value unless is it stated otherwise.

The viscosity is presented in the unit centipoise (cP). The higher the measured cP values, the higher the viscosity.

Analysis 3: Insoluble protein matter

The amount of insoluble protein matter of a liquid sample is quantified as the amount of protein that is removed from the sample by centrifugation at 3000 g for 5 minutes at 22 degrees C using the following steps:

- Approx. 20 g sample is adjusted to and equilibrated at 22 degrees C and is added to centrifuge tubes and subsequently centrifugated at 3000 g for 5 minutes at 22 degrees C.

- Total protein is measured prior to centrifugation of the sample ($P_{total}$) and in the supernatant after centrifugation ($P_{3000\ g}$) using Analysis 1.

If the sample is a powder, 10 g of the powder is suspended in 90 g demineralized water and allowed to hydrate at 22 degrees C under gentle stirring for 1 hours. Approx. 20 g of hydrated sample (e.g. liquid sample of the suspended powder sample) is analysed as described above.

The percentage of insoluble protein matter is calculated as:

$$insoluble\ protein\ matter = \left(\frac{P_{total} - P_{3000\ g}}{P_{total}}\right) * 100\%$$

Analysis 4: Determination of ash content

The ash content of a food product is determined according to NMKL 173:2005 "Ash, gravimetric determination in foods".

Analysis 5: Determination of the total solids of a solution

The total solids of a solution may be determined according NMKL 110 2nd Edition, 2005 (Total solids (Water) - Gravimetric determination in milk and milk products). NMKL is an abbreviation for "Nordisk Metodikkomité for Næringsmidler".

The water content of the solution can be calculated as 100% minus the relative amount of total solids (% w/w).

Analysis 6: Determination of pH

All pH values are measured using a pH glass electrode and are normalised to 25 degrees C. The pH glass electrode (having temperature compensation) is rinsed carefully before and calibrated before use.

When the sample is in liquid form, then pH is measured directly in the liquid solution at 25 degrees C.

When the sample is a powder, 10 gram of a powder is dissolved in 90 ml of demineralised water at room temperature while stirring vigorously. The pH of the solution is then measured at 25 degrees C.

Analysis 7: Determination of the amounts of calcium, magnesium, sodium, potassium, phosphorus (ICP-MS method)

The total amounts of calcium, magnesium, sodium, potassium, and phosphorus are determined according to Example 9.5 of WO 2018/115520.

Analysis 8: Determination of the total amount of lactose

The total amount of lactose is determined according to ISO 5765-2:2002 (IDF 79-2: 2002) "Dried milk, dried ice-mixes and processed cheese - Determination of lactose content - Part 2: Enzymatic method utilizing the galactose moiety of the lactose".

Analysis 9: Determination of the total amount of carbohydrate

The amount of carbohydrate is determined by use of Sigma Aldrich Total Carbohydrate Assay Kit (Cat MAK104-1KT) in which carbohydrates are hydrolysed and converted to furfural and hydroxyfurfurals which are converted to a chromagen that is monitored spectrophotometrically at 490nm.

Analysis 10: Determination of the total amount of Lipids

The amount of lipid is determined according to ISO 1211:2010 (Determination of Fat Content - Röse-Gottlieb Gravimetric Method).

Analysis 11: Determination of the casein content relative to total protein

The amount of casein is determined according to ISO 17997-1:2004, Milk - Determination of casein-nitrogen content - Part 1: Indirect method (Reference method).

Analysis 12: Determination of the whey protein content relative to total protein

The amount of whey protein of a sample is calculated as the amount of total protein minus the amount of casein.

Analysis 13: Determination of the total amount of the individual catechin compounds

The determination of the total amount of the individual catechin compounds is performed according to Ferruzzi et al ("Analysis of catechins from milk-tea beverages by enzyme assisted extraction followed by high performance liquid chromatography"; Food Chemistry; Volume 99, Issue 3, 2006, Pages 484-491).

If the determination relates to a protein-free sample, the enzymatic digestion may be omitted.

Analysis 14: Determination of the total amount of polyphenol

The total amount of polyphenols is measured according to Chávez-Servín et al (Total phenolic compounds in milk from different species. Design of an extraction technique for quantification using the Folin-Ciocalteu method; Small Ruminant Research 160 (2018) 54-58) using the analysis for Total Phenolic Compounds (TPC).

**Example 1: Documenting the impact of increasing levels of polyphenols on the immediate viscosity of MCI-based liquids. (not according to the invention as claimed)**

Purpose:

The purpose of the experiment reported in this Example was to document the effect of increasing levels of the EGCG on the viscosity of aqueous liquids containing 11% (w/w) MCI-based protein immediately after production.

Materials:

- Micellar Casein Isolate (MCI) powder obtained by microfiltration/diafiltration of skimmed milk at 50 degrees C using a 0.1 micron filtration membrane and subsequent concentration and spray-drying of the microfiltration retentate. The chemical composition of the MCI powder is shown in Table 1.
- EGCG extract from green tea (powder form) >94% purity of EGCG (Sunphenon EGCg, Taiyo GmbH, Schwelm, Germany)
- Water
- Sodium Azide, $NaN_3$ (Merck, Darmstadt, Germany)

Table 1 Composition of the MCI powder

| Composition of the MCI powder | % w/w |
| --- | --- |
| Protein | 86.5 |
| Ca | 2.61 |
| Cl | 0.17 |
| Lipid | 1.38 |
| K | 0.24 |
| Lactose | 0.59 |
| Mg | 0.10 |
| Na | 0.06 |
| P | 1.57 |
| Weight patio between casein and whey protein | approx. 95:5 |
| Micellar casein relative to total protein | approx. 95% |

Methods:

The liquid samples were prepared by added MCI powder to water at room temperature to provide 11%, 12% or 13% (w/w) protein content of the final liquid samples. Sodium Azide at 0.02% was also added. The polyphenol EGCG was also added (except for the control samples) to the desired weight ratios between EGCG and total protein (0.01, 0.03, 0.06 or 0.10) of the final liquid samples.

At this point, the liquid samples were mixed with an Ultra Turrex T25 (IKA Labortechnik , Staufen, Germany) for 5 minutes at speed setting 4 (19,000 1/min). This mixture was poured into test tubes (filled to about 2/3 height) and placed in a heated water bath (Haake A10, Thermo Scientific, Waltham, USA) set to 90°C for a total of 3 minutes. When the time was up, the test tubes were removed from the water bath and placed in a bucket full of ice for rapid cooling. After about 10 minutes, the contents of all the test tubes were poured into a beaker and homogenized in a high-pressure homogenizer (Rannie, SPX Flow, USA) at 600 MPa for 5 minutes. The samples were stored in a clean beaker, covered and placed in the fridge (5 degrees C) ready for measurement.

All sample had a pH of approx. 6.7.

Viscosity measurements were performed at 5 degrees C according to Analysis 2. All measurements were performed within 30 minutes after preparation of the liquid samples.

Results:

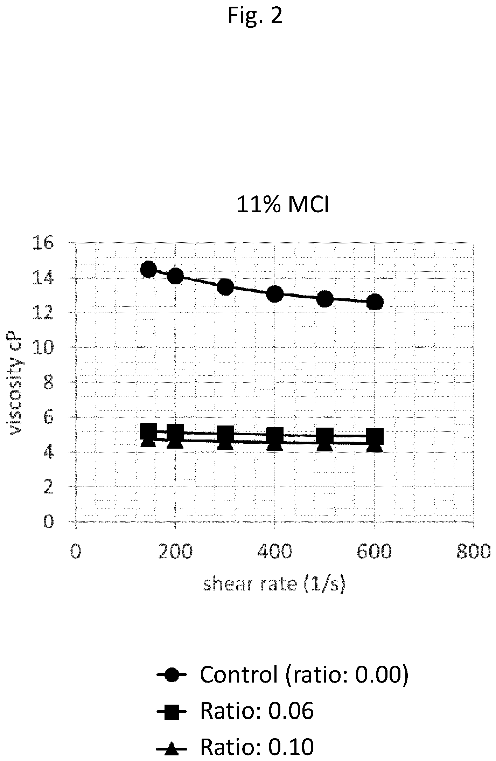

Figures 2, 3 and 4 show viscosity values vs. shear rate for the three different liquids prepared in this example. Figure 2 shows the results obtained from viscosity flow curves of MCI liquids containing 11% protein content (w/w). The figure shows the control (circles) corresponding to the MCI liquid without any added polyphenols, the squares corresponding to the MCI liquid having an EGCG/protein ratio of 0.06 and the triangles corresponding to the MCI liquid having an EGCG/protein ratio of 0.10. At all shear rates probed, the viscosity of both samples containing EGCG was substantially and surprisingly lower than for the control sample. Between the control sample and the polyphenol-containing samples, the viscosity was more than halved, from 14.5cP to 4.7cP (at 145 $s^{-1}$). Also quite surprisingly, the difference in viscosity levels (at all shear rates) was not markedly different between the two different amounts of EGCG (5.19cP and 4.72cP, though the EGCG/protein ratio was nearly doubled from 0.06 to 0.10).

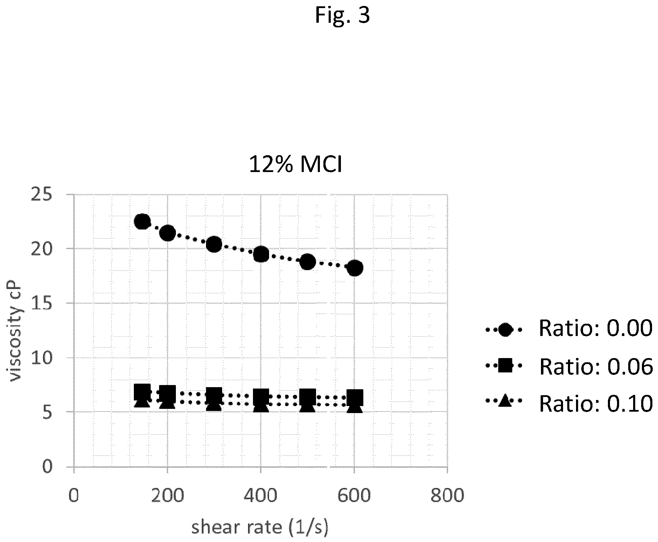

Figure 3 shows the viscosity curve vs. shear rate for the samples containing 12% (w/w) protein. The samples having a EGCG/protein ratio of 0.06 are shown as squares and samples having a EGCG/protein ratio of 0.10 are shown as triangles. The viscosity values of these samples are higher than those presented in Figure 2, simply because these samples contain 1% more protein in them, so whereas MCI 11% showed viscosities from 12 to 14 cP, the control sample of MCI 12% had viscosities ranging from 18 to 22 cP. On the other hand, the samples containing polyphenols showed a marked decrease in viscosities at all shear rates, just as has been shown in Figure 2. For example, at a shear rate of 145 $s^{-1}$, the control sample without polyphenols had a viscosity of 22.5 cP whereas the sample having an EGCG/protein ratio of 0.06 had a viscosity of 6.86 cP and that having a EGCG/protein ratio of 0.10 had a viscosity of 6.11 cP. Also, and just as above, the decrease in viscosity was not vastly different when increasing the EGCG/protein ratio 0.06 to 0.10.

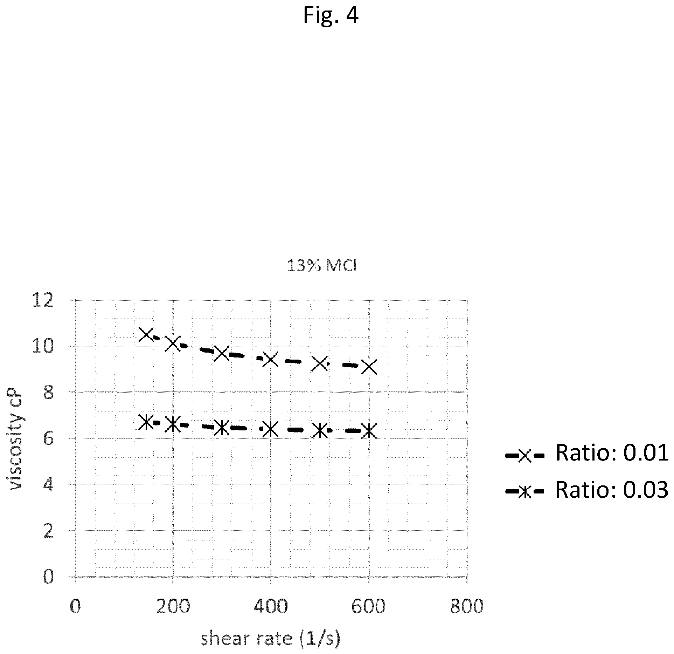

Lastly, Figure 4 shows the results of a liquid made with 13% protein content with two different levels of polyphenols, this time an EGCG/protein ratio of 0.01 and 0.03. Surprisingly, the viscosity of the sample containing 13% protein and 3% EGCG showed very similar viscosities to the samples shown above with less protein content (11 and 12%) and higher polyphenol level (0.06 and 0.10%). However, the sample containing EGCG/protein ratio of 0.01 showed slightly higher viscosities at all shear rates. Both levels of polyphenols, however, were able to reduce the bulk viscosity of the liquid sample made containing 13% protein.

Conclusion

This example demonstrates that the addition of polyphenols to MCI liquids made from powder at a range of high protein concentrations are able to lower the viscosity of said liquids immediately after production. This effect is quite dramatic and has been proven for a large range of polyphenol concentrations.

The inventors have seen indications that the effects obtained using an EGCG also can be obtained using the structurally related compounds: catechin, epicatechin, gallocatechin, epigallocatechin, catechin 3-gallate, epicatechin 3-gallate; either alone, in combination and/or in combination with EGCG.

**Example 2: Documentation of the impact of cold storage on the viscosity of MCI-based liquids. (not according to the invention as claimed)**

Purpose:

The purpose of the experiment reported in this Example was to document the viscosity development of high protein MCI-based liquids when stored at refrigeration temperatures.

Materials and Methods:

The samples used were those presented in Example 1. They included MCI liquid liquids made at 11%, 12% and 13% (w/w) protein content with and without the presence of different concentrations of polyphenols.

After the preparation of the samples was finished, as described in Example 1, the liquids were stored in the refrigerator at around 3°C for up to 63 days. At set time points, the samples were taken from the fridge and the necessary amount of sample (about 4 mL) were placed in the rheometer to run a viscosity flow test. The remaining stock samples were then immediately returned to the fridge.

The viscosity measurements were done following the methodology described in Example 1.

Results:

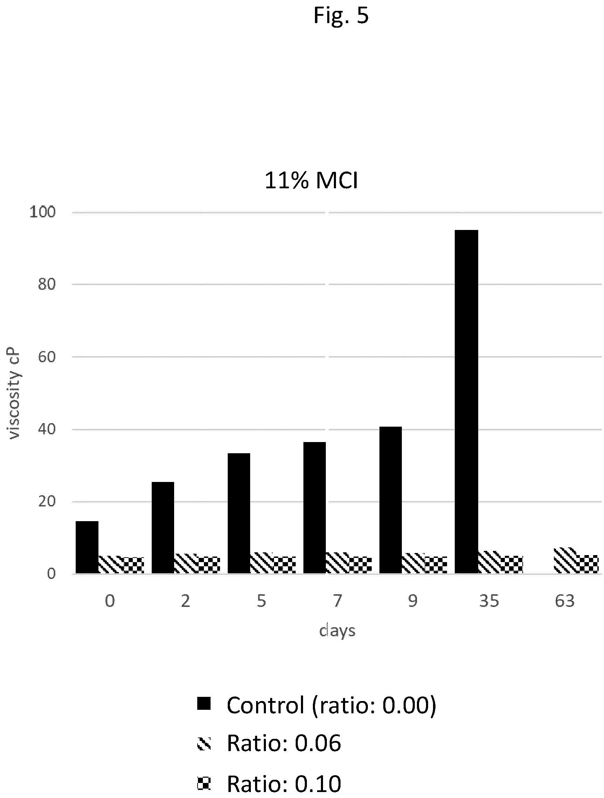

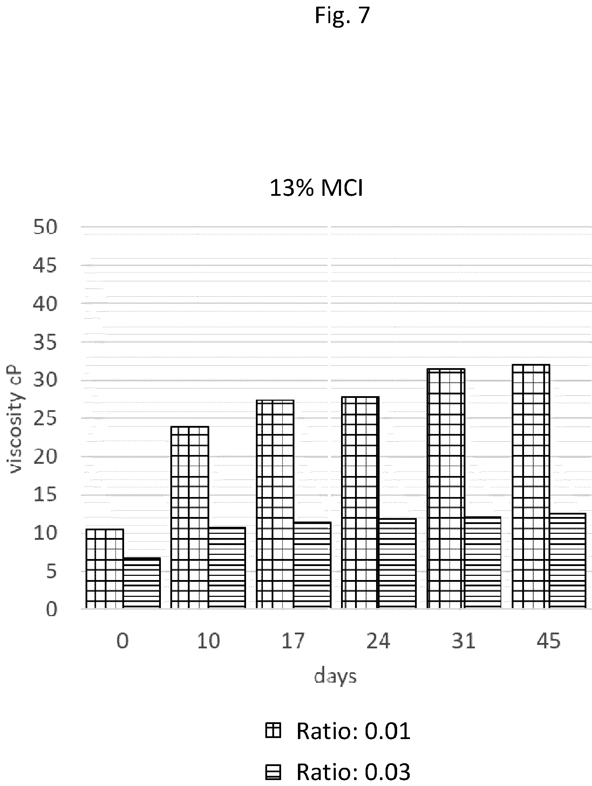

Figure 5, 6 and 7 show the different viscosities of the samples at a shear rate of 145 s$^{-1}$ obtained from viscosity flow curves of MCI liquids containing 11%, 12% and 13% protein content (w/w), respectively, and performed at 5 degrees C.

Figure 5 shows the MCI sample prepared with 11% (w/w) protein content without EGCG (the control), with an EGCG/protein ratio of 0.06 (striped bars) and with an EGCG/protein ratio of 0.10 (chequered bars) plotted as a function of time, from 0 to 63 days of cold storage after the liquid was prepared. The control sample (black bars) clearly shows that the viscosity of the MCI liquid increases steadily and continuously throughout the length of time probed, starting from around 14 cP, increasing to over 95 cP after 35 days. At 63 days of storage at refrigeration temperatures, the sample could not be measured any more due to the fact that it had become solid in the beaker and the measurement of a viscosity would be impossible.

The samples containing polyphenols on the other hand (striped and chequered bars), behaved in a very different way. Neither sample containing an EGCG/protein ratio 0.06 or 0.10 showed discernible increase in their viscosities throughout the period of time probed. The samples' initial viscosities were 5.19 cP and 4.72 cP respectively, and increased to only 7.38 cP and 5.32 cP after approximately two months of storage. Indeed, after 63 days, when the control sample had become solid and was not possible to measure, the EGCG-containing samples were still very much liquid and with a viscosity quite similar to the original one which had been measured within 30 minutes of preparation (as shown in Example 1). Again in the case of storage, both the samples having an EGCG/protein ratio of 0.06 and 0.10 did not show vast differences in the viscosities of the liquids throughout the 63 days, both samples ranging in viscosity well below 10 cP and having pH values of approx. 6.7.

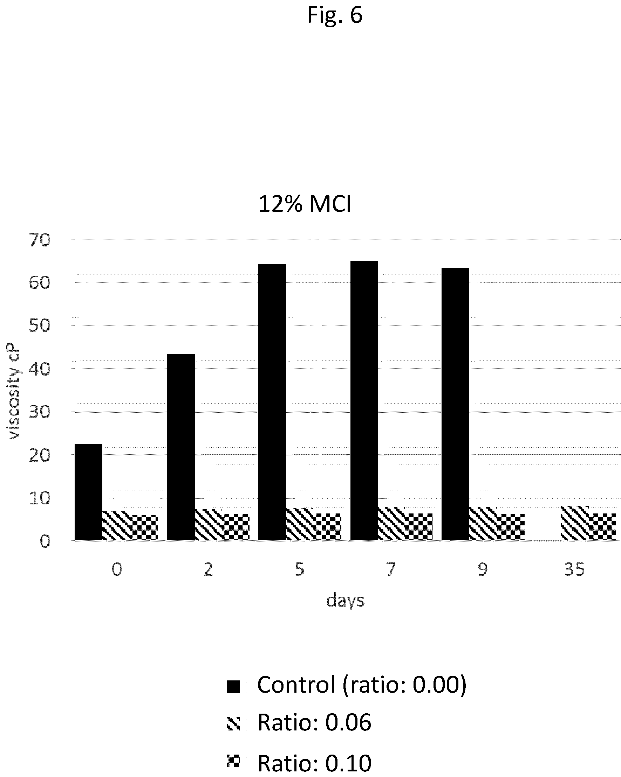

Figure 6 shows the MCI sample prepared this time with 12% (w/w) protein content, with the control (no EGCG added, black bars), an EGCG/protein ratio of 0.06 (striped bars), and an EGCG/protein ratio of 0.10 (chequered bars). Just as in the case shown in Figure 5, the control sample increased in viscosity and after 5 days, the sample was so viscous that after removal from the fridge, it needed to be left at room temperature for approx. 1 hour before being able to be poured into the rheometer. Indeed at 35 days of cold storage this sample had already become a gel.

Once again, and just as shown in the case for the 11% protein sample mentioned above, both samples containing polyphenols remained liquid and had a nearly constants pH throughout the period of storage in the fridge. Their viscosities again, were very similar to each other and showed viscosities of under 10 cP at all times, which was quite surprising considering the measurement temperature (5°C) and the high protein content (12%) of the samples.

Finally, 7 shows the viscosity measured at 145 s$^{-1}$ for an MCI sample prepared with 13% (w/w) protein content. This figure shows two samples, one having an EGCG/protein ratio of 0.01 and another having an EGCG/protein ratio of 0.03. The liquid sample having an EGCG/protein ratio of 0.03 (horizontal lines) showed, just like in the previous two figures, that the viscosity of the liquid remains relatively constant throughout the 45 days measured and after being stored at fridge temperatures. There seems to be a slight increase from about 7 cP to around 12 cP during the first 10 days, but after this time the viscosity reaches a plateau. Again quite surprisingly, this sample remained totally liquid during the 45 days of measurement. The liquid sample having an EGCG/protein ratio of 0.01 behaved slightly different. The effect on viscosity was less drastic as the sample having an EGCG/protein ratio of 0.03 (as also shown in Example 1, Figure 4), and the viscosity increased throughout the 45 days. Again, the first 10 days showed the highest change, going from 10.5 cP to 23.9 cP. After 45 days, the viscosity changed to 32.1 cP, showing that the rate of change had drastically diminished and that the sample was still very much in liquid form.

Conclusion

This example demonstrates that the addition of polyphenols such as e.g. EGCG to MCI liquids did not only lower the viscosity of said liquid immediately after production but were able to prevent cold gelation and significant cold thickening, and kept the sample in liquid form, long after the sample without the addition of polyphenols had become a solid gel. This example shows the surprising stabilizing effect against cold gelation that polyphenols can have when added to a high protein MCI liquid. Gelation at refrigeration temperatures was suppressed for a wide range of polyphenol concentrations.

The inventors have seen indications that the effects obtained using an EGCG also can be obtained using the structurally related compounds: catechin, epicatechin, gallocatechin, epigallocatechin, catechin 3-gallate, epicatechin 3-gallate; either alone, in combination and/or in combination with EGCG.

**Example 3: Documenting the impact of heating temperature on the immediate viscosity. (not according to the invention as claimed)**

Purpose:

The purpose of the experiment reported in this Example was to document how the heating temperature of MCI liquids having different protein concentrations and containing different levels of the EGCG polyphenol affects the viscosity of the MCI liquids immediately after production.

Materials:

The materials of Example 1 were also used in Example 3.

Methods:

The liquids were prepared in a pilot plant setup using the process outlined below.

| | | | |
|---|---|---|---|
| 1 | Heat water | °C | 60 |
| 2 | Mixing, mix dry ingredients in liquid | Yes/No | Yes |
| 3 | Mixer, Brine Mixer Rotostat | Yes/No | No |
| 4 | Mixing, time | min | 15 |
| 5 | Homogenization, two-step (first step) | bar | 150 |
| 6 | Prepasteurization, UHT Tubular Heat Exchanger Cell 1 | °C | 80 |
| 7 | Pasteurization, UHT Tubular Heat Exchanger Cell 3 | °C | Varied |
| 8 | UHT process, time | sec | 6 |
| 9 | Cooling, UHT Cell 1 Temperature | °C | 78 |
| 10 | Homogenization, Downstream | Yes/No | Yes |
| 11 | Homogenization 2, two-step (first step) | bar | 150 |
| 12 | Homogenization 2, two-step (second step) | bar | 50 |
| 13 | Cooling, UHT Cell 3 Temperature | °C | 10 |
| 14 | Filling, Sterile Bottle Transparent, 100ml | | Varied |
| 15 | Storage, temperature | °C | 5 |

In short, water was heated to 60°C and the dry ingredients were added (Steps 1 and 2). These consisted of MCI powder alone for the control samples or MCI and polyphenols (also in powder form) to a final protein content of 14% (w/w) and final EGCG/protein ratio of 0.06. The mixture was mixed and homogenized (Steps 4 and 5), heated to different temperatures (Steps 6 to 9), homogenized again (Steps 10 to 13) and finally bottled.

In one particular case when the polyphenol was added after heating, the sample procedure containing only MCI was kept unchanged until Step 9, after which the polyphenol was added and the homogenization step was done in the lab with a high-pressure homogenizer (Rannie, SPX Flow, USA) at 600mPa for 5 minutes. The drinks were then bottled and kept in the fridge, ready for measurement.

The temperatures of heating (when the polyphenol powder was added together with the MCI powder in Step 2) were 110°C, 125°C and 143°C (Step 7). In the case when the polyphenol was added after heating (what will be called the "No heat PP" sample), the MCI was heated to 143°C.

Viscosity Measurements:

The viscosity measurements were done at 5 degrees C according to Analysis 2 and the samples were measured within 2 hours after the pilot plant production was finished.

Results:

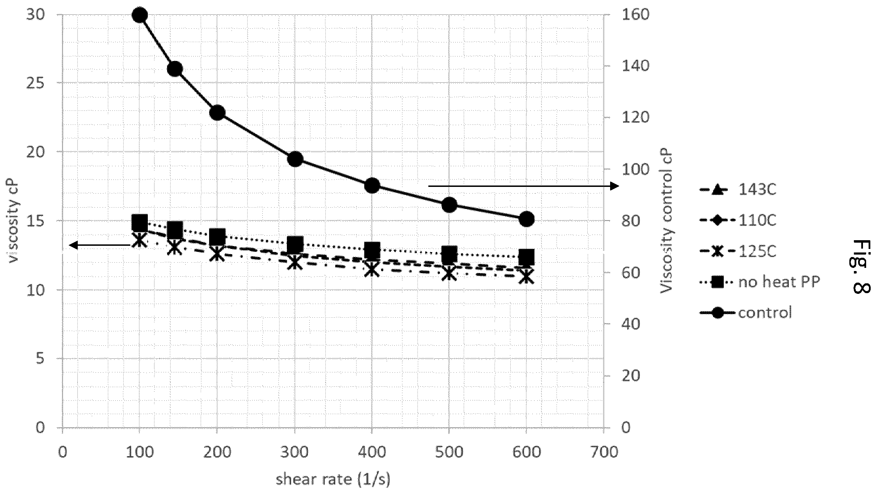

Figure 8 shows the viscosity flow curve as a function of shear rate for five samples which underwent different processing steps. All samples had pH values of approx. 6.7. The control sample (circles) corresponds to the liquid containing only MCI and heated to 143°C, the process as shown in Table 3.2. It had the highest viscosities, ranging from 81 cP to 160 cP (please note that the plot of the control curve uses the right-hand-side y-axis). The sample heated to 143°C and containing EGCG is shown in Figure 8 as triangles with long-dashed line. There was a dramatic decrease in the viscosity of the liquid at all shear rates probed, dropping from 139 cP from the control to 13 cP at a shear rate of 145 s$^{-1}$. This corresponds to one order of magnitude lower viscosity. Quite surprisingly, the same results were observed for the samples heated to 110°C and 125°C also containing EGCG (diamond and cross respectively in Figure 8). There was no discernible differences between these three samples (MCI heated together with EGCG to 143°C, 125°C and 110°C) as all viscosities range between 14 cP at low shear and 11 cP at high shear. It seems that heating temperature does not have a large impact on the viscosity-suppressing abilities of EGCG.

In the case of the sample where the polyphenol was added after heating (therefore the polyphenol did not undergo the heating step), shown as a square with dotted line, the same viscosity reduction was observed, well below the control and in the same range as the samples where the EGCG underwent heating. This was quite unexpected and it seems the polyphenol is able to control the viscosity even if does not undergo a heat-treatment together with the protein.

Conclusion

This example demonstrates that the addition of polyphenols to MCI liquids made from powder and with a range of different processing temperatures was able to lower the viscosity of the liquids immediately after production. Quite surprisingly, the heating temperature at which the samples were subjected did not seem to have an impact on the bulk viscosity of the liquids. Furthermore, even when the polyphenols were added after heating, meaning that they did not underwent the heating step, the viscosity of the sample ended being very similar to those of the samples where the EGCG underwent the heating step. The polyphenol was able to stabilize a high protein liquid even if it was added after the heating process has taken place or if no heat-treatment had taken place.

The inventors have seen indications that the effects obtained using an EGCG also can be obtained using the structurally related compounds: catechin, epicatechin, gallocatechin, epigallocatechin, catechin 3-gallate, epicatechin 3-gallate; either alone, in combination and/or in combination with EGCG.

**Example 4: Documenting the impact of heating temperatures on viscosity after cold storage. (not according to the invention as claimed)**

Purpose:

The purpose of the experiment reported in this Example was to investigate the viscosity development of some of the MCI-based liquids prepared and presented in Example 3, when stored at refrigeration temperatures for longer durations.

Materials and Methods:

After preparation the bottled liquids were stored in the refrigerator at around 3 degrees C. After 130 days of storage, the samples were taken from the fridge and the necessary amount of sample (about 4 mL) was placed in the rheometer to run a viscosity flow test according to Analysis 2 at 5 degrees C.

Results:

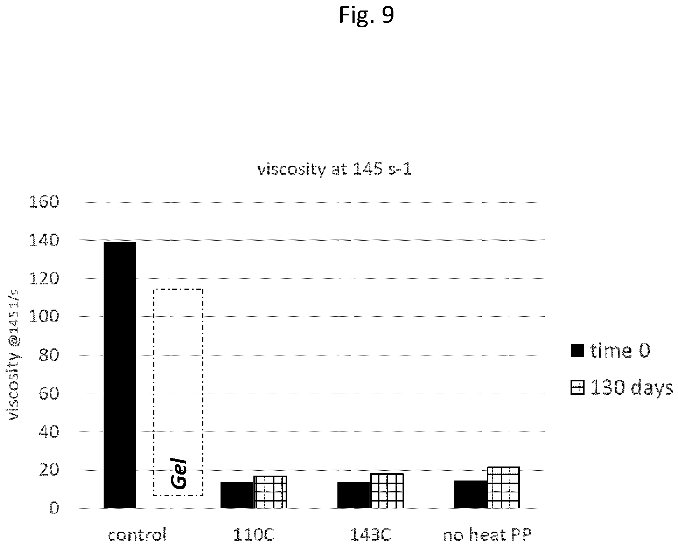

Figure 9 shows the viscosities for the different samples shown at a shear rate of 145 s$^{-1}$. The black bars correspond to the viscosities measured immediately after preparation of the liquid (time 0), while the gridded bars correspond to the viscosities measured after 130 days of storage at refrigeration temperatures. As already seen in Example 3, the control sample, without added polyphenol, has a "time 0 viscosity" much higher than those corresponding to the sample containing polyphenols and all these samples have very similar initial viscosities regardless of the heating temperature used to prepare them. After 130 days of storage, the control sample became a solid gel and viscosity could not be measured. On the other hand, all samples containing EGCG were still liquid, with viscosities ranging between 16.7 cP and 21.4 cP and a pH of approx. 6.7, regardless at which temperature the samples had been heated. Even the sample where the EGCG was added after the heating step, thereby never having been heated, the storage stability was kept intact.

Conclusion:

This example demonstrates that the heating temperature of preparation of MCI liquids with added polyphenols did not seem to have an impact on the development of the viscosity after cold storage of the liquids. Furthermore, even when the polyphenols were added after heating, the sample after over 2 months of storage was still a liquid.

The inventors have seen indications that the effects obtained using an EGCG also can be obtained using the structurally related compounds: catechin, epicatechin, gallocatechin, epigallocatechin, catechin 3-gallate, epicatechin 3-gallate; either alone, in combination and/or in combination with EGCG.

**Example 5: Documenting the impact of the addition of polyphenols on the viscosity of MPC-based liquids. (not according to the invention as claimed)**

Purpose:

The purpose of the experiment reported in this Example was to document the effect of the addition of the polyphenol EGCG to a high protein liquid made from Milk Powder Concentrate, MPC, the bulk viscosity of the liquid.

Materials:

In addition to the materials of Examples 1, a milk protein concentration (MPC) powder (Fromaquik A 86/5, 82% total protein, 2.5% lactose, 2.0% fat, a ratio between casein and whey protein of approx. 80:20, and a content of micellar casein relative to total protein of approx. 80%) was used.

Methods:

The samples were prepared following the methodology explained in Example 1. They included MCI liquids having a protein content of 14% (w/w) and an EGCG/protein ratio of 0.06 as well as MPC liquids having a protein content of 14% (w/w) and either containing no EGCG or having an EGCG/protein ratio of 0.06.

The viscosity measurements were done following the methodology also described in Analysis 2 at 5 degrees C.

Results:

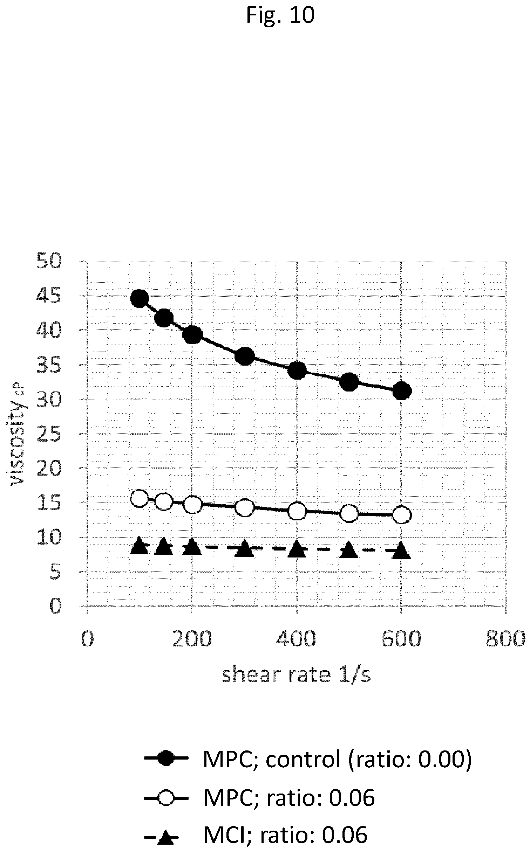

Figure 10 shows the results of the two MPC-based liquids, one having an EGCG/protein ratio of 0.06 (white circles) and one without EGCG (black circles). This figure also shows the result obtained for an MCI- based liquid (black triangles) having an EGCG/protein ratio of 0.06.

It is very clear from this figure that EGCG does indeed reduce the viscosity of high protein MPC liquids. The reduction is quite drastic, dropping from around 41.8 cP at 145 s$^{-1}$ (control) down to 15.2 cP (EGCG/protein ratio of 0.06).

Conclusion:

The results of this Example showed unequivocally that the presence of EGCG also reduces the viscosity of MPC-based liquids immediately after production. Furthermore, when the reduction was compared to that obtained for MCI liquids, it was noted that the polyphenols seem to have a somewhat similar degree of reduction in viscosity.

The inventors have seen indications that the effects obtained using an EGCG also can be obtained using the structurally related compounds: catechin, epicatechin, gallocatechin, epigallocatechin, catechin 3-gallate, epicatechin 3-gallate; either alone, in combination and/or in combination with EGCG.

**Example 6: Heat-treated, high protein nutritional liquid and their immediate and long-term viscosities**

Purpose:

The purpose of the experiment reported in this Example was to document the viscosity reduction and reduced tendency to cold gelation/thickening in nutritional liquids containing protein in a concentrations 12-20% w/w and after 6 months storage.

Materials and methods

A number of different heat-treated, high protein nutritional liquid were prepared using the following materials:

- MCI powder with the chemical composition shown in Table 6.1.
- Milk Protein Concentrate powder, MPC, commercial name Fromaquik A 86/5, (Fayrefield, Switzerland) with the chemical composition shown in Table 6.1.
- EGCG powder with over 94% purity, purchased from Taiyo GmbH, Schwelm, Germany under the commercial name of Sunphenon EGCg.
- Sodium Azide, $NaN_3$ (Merck, Darmstadt, Germany)
- Water

Table 6.1: Chemical composition of MCI powder used in the preparation of the MCI dispersions

| Component | MCI (%) | MPC (%) |
|---|---|---|
| Total solids | 96.23 | 94 |
| Protein as is (Nx6.38) | 89.9 | 85 |
| Fat | 1.38 | 2 |
| Lactose | 0.59 | 2.5 |
| Ash | 7.8 | 8 |
| Casein of protein | 97 | ~80 |
| Calcium Ca | 2.61 | |
| Sodium Na | 0.06 | |
| Potassium K | 0.24 | |
| Magnesium Mg | 0.10 | |
| Phosphorus P | 1.57 | |
| Chloride Cl | 0.17 | |

Three different preparation methods were followed to prepare the nutritional liquids:

Case A: preparation of the control nutritional liquids
Case B: preparation of nutritional liquids where the EGCG was added after the heat-treatment
Case C: preparation of nutritional liquids where the EGCG was added before the heat-treatment

*Case A: control nutritional liquids*

The appropriate amount of MCI or MPC powder was added to water at room temperature to final total protein concentrations of 12%, 15%, 18% or 20% (w/w). The nutritional liquid was mixed with an Ultra Turrex T25 (IKA Labortechnik, Staufen, Germany) for 5 minutes at speed setting 4 (19,000 1/min). This mixture was then homogenized in a high-pressure homogenizer (Rannie, SPX Flow, USA) at 250 MPa for 10 minutes. At this point, the collected sample was UHT treated using a HT122 bench-top UHT, (OMVE Netherlands B.V., De Meern, The Netherlands). Table 6.2 shows the settings used.

Table 6.2: Settings used to UHT treat the nutritional liquids prepared in the lab.

| Pre-pasteurization | 80°C (*set initially to 90°C. Maintain at 80°C while processing*) |
|---|---|
| UHT temperature | 143 °C |
| UHT holding time | 6 sec |
| Cooling, T1 | 80 °C |
| Cooling, T2 | 40 °C |

After UHT treatment sodium azide was added in a concentration of 0.02% (w/w). At this point the sample was homogenized once again with the same settings as in the first homogenization. Finally, the sample was poured into sterilized plastic bottles, capped placed in the refrigerator until further use. In this case (Case A) no polyphenol was used as it was the control sample.

*Case B: UHT-after*

In this case, the required amount of polyphenol was added alongside the protein powder at the very first step of the process and both the protein and the polyphenol were homogenized and UHT treated together. The remainder of the process follows the exact same methodology as in Case A described above. Case B shows that the UHT process was *after* the addition of the polyphenol.

*Case C: UHT-before*

The processing was followed as described in Case A, however, as soon as the nutritional liquids were returned to the lab after UHT treatment at the pilot hall, EGCG powder was added alongside the NaN$_3$, followed by the second homogenization step and subsequent bottling. This means that the EGCG never went through the UHT process. Although it is clear that this would not be acceptable from a bacteriological point of view, the aim of this exercise was to determine whether heating had an effect on the stability of the protein/EGCG mixtures, or whether simply the presence of polyphenols was enough to modify stability.

*Experimental design*

Table 6.3 shows the EGCG/protein combinations tested in this example. Both sets of experiments, when the UHT was performed after the addition of polyphenol (Case B, where the polyphenols where heated alongside the protein) and when the UHT was performed before the addition of EGCG (Case C where EGCG was never UHT-treated), are shown. The number of times that the particular experiment was repeated is also shown. Please note that polyphenol concentration is given in gram polyphenol per gram of total protein while the concentration of protein given in percent of total protein relative to the weight of the nutritional liquid.

| EGCG \ MCI % | Control | Case C: UHT-before 0.005 | 0.01 | 0.02 | 0.03 | 0.06 | Case B: UHT-after 0.005 | 0.01 | 0.02 | 0.03 | 0.06 |
|---|---|---|---|---|---|---|---|---|---|---|---|
| 12 | 1x | | | | | | 2x | | | | |
| 15 | 1x | | 2x | 2x | | | | 2x | 3x | 2x | 1x |
| 18 | | | | | | | | | 1x | 2x | 2x |
| 20 | | | | | | | | | | | 2x |

| EGCG \ MPC % | Control | 0.005 | 0.01 | 0.02 | 0.03 | 0.06 | 0.05 | 0.01 | 0.02 | 0.03 | 0.06 |
|---|---|---|---|---|---|---|---|---|---|---|---|
| 12 | 1x | | | | | | 3x | | | | |
| 15 | 1x | | 2x | 2x | | | | 2x | 3x | 2x | 1x |
| 18 | | | | | | | | | 1x | 2x | 2x |
| 20 | | | | | | | | | | | 3x |

Table 6.3: number of trials performed for each protein/EGCG combination for both cases described above.

*Analyses*

The pH of the nutritional liquids were was measured according to Analysis 6 right before the bottling step and furthermore measured after 3 and 6 months of storage under refrigeration.

The viscosity measurements according to Analysis 2 of the nutritional liquids were performed 30 minutes after preparation and furthermore after 1, 2, 3, 4, 6, 10, 12 and 24 weeks of storage under refrigeration.

Results

*pH:*

The pH of the nutritional liquids remained in the range of 6.5-7.0 during the experiment, and typically in the range of 6.6-7.0; both with respect to Case B-liquids and Case C-liquids.

*Viscosity:*

As observed in the previous Examples, the addition of EGCG led to a significant drop in the viscosities, both immediately after the production of the nutritional liquids and during subsequent storage at 5 degrees C. This effect was observed for both Case B- and Case C-nutritional liquids.

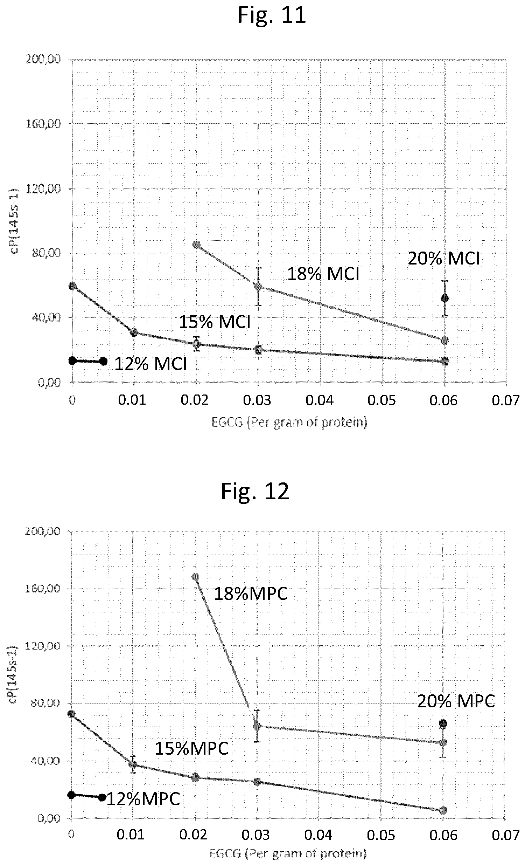

Figures 11 and 12 show the viscosity changes for MCI-based and MPC-based nutritional liquids immediately after production. We note that the viscosity drop is even more pronounced at higher protein concentration and furthermore that it was not feasible to produce the heat-treated liquid at 18% and 20% protein (in the used equipment) without prior addition of EGCG.

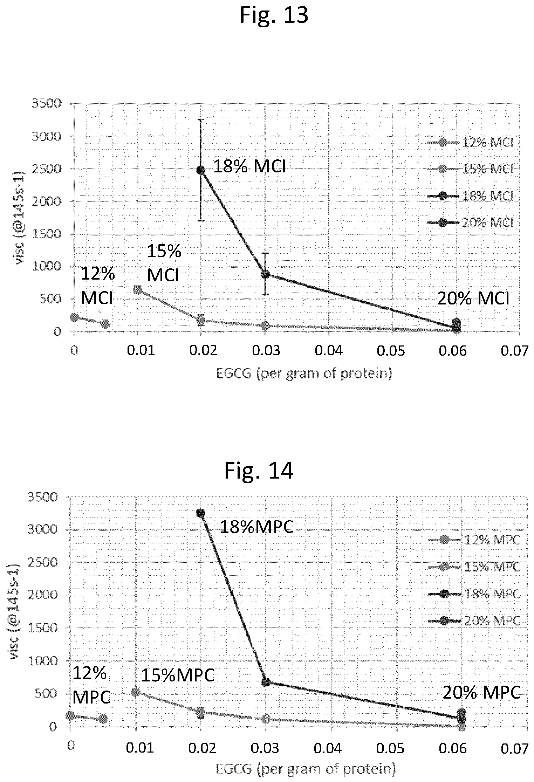

Figures 13 and 14 show the viscosity changes for MCI-based and MPC-based nutritional liquids after 6 months storage under refrigeration (5 degrees C). Significant cold thickening/gelling was observed during storage and the tendency of cold thickening/gelling increased with protein content. However, we note again that the viscosity and hence the level of cold thickening/gelling drops if the liquid contains EGCG and that the drop is more pronounced at higher protein concentration. Even the liquids containing 12% protein were significantly affected by the addition of EGCG even though it is difficult to see directly from figures 13 and 14. An EGCG/protein ratio of just 0.005 reduced the viscosity of the 12% MCI nutritional liquid after 6 months storage from about 220 cP to about 120 cP and reduced the viscosity of the 12% MPC nutritional liquid after 6 months storage from about 160 cP to about 110 cP.

Conclusion

It was demonstrated that UHT-treated nutritional liquids containing 12%, 15% w/w, 18% w/w and 20% w/w protein could easily be produced by using a suitable amount of catechin compounds. The development of cold thickening/gelation in these nutritional liquids was significantly reduced or even avoided by addition of catechins. The viscosity of the liquids immediately after heat-treatment was furthermore significantly reduced.

**Example 7: Heat-treated, caseinate-containing, high protein nutritional liquid and their immediate and long-term viscosities**

Purpose:

The purpose of the experiment reported in this Example was to investigate the impact of the addition of catechin compounds on the immediate viscosity and tendency to cold gelation/thickening of nutritional liquids containing protein in a concentration of 15% w/w and comprising sodium caseinate, micellar casein and whey protein.

Materials and methods

Seven heat-treated, high protein nutritional liquids were prepared using the following materials:

- Milk Protein Concentrate powder, MPC, commercial name Fromaquik A 86/5, (Fayrefield, Switzerland) with the chemical composition shown in Table 7.1.
- Sodium caseinate, NaCas (Nestle, Switzerland)
- EGCG powder with over 94% purity, purchased from Taiyo GmbH, Schwelm, Germany under the commercial name of Sunphenon EGCg.
- Sodium Azide, $NaN_3$ (Merck, Darmstadt, Germany)
- Water

Table 7.1: Chemical composition of MCI powder used in the preparation of the MCI dispersions

| Component | MPC (%) | Na Caseinate (%) |
| --- | --- | --- |
| Total solids | 94 | 97.66 |
| Protein as is (Nx6.38) | 85 | 92.61 |
| Fat | 2 | 0.85 |
| Lactose | 2.5 | <0.3 |
| Ash | 8 | 3.64 |
| Casein of protein | ~80 | ~100 |
| Calcium Ca | | 0.059 |
| Sodium Na | | 1.2 |
| Phosphorus P | | 0.73 |
| Chloride Cl | | 0.14 |

The samples of heat-treated, nutritional liquids were prepared as outlined in Table 7.2 and according to the method described in Example 1 with the following exceptions:

- the second homogenisation was performed at 250 MPa for 5 minutes
- samples 1-3 and 5-7 were prepared by mixing all powders directly with water prior to the first homogenisation
- sample 4 was prepared to overcome the high initial viscosity and subsequent cold thickening/gelation of sample 2 and was prepared by pre-mixing MPC, EGCG and water and subsequently adding NaCas prior to the first homogenisation

*Table 7.2 Experimental design. "Ctrl" means control. Immediate viscosity is the viscosity immediately after production of the nutritional liquid.*

| | Sample | | | | | | |
|---|---|---|---|---|---|---|---|
| Ingredients | 1 (ctrl) | 2 | 3 | 4 | 5 (ctrl) | 6 | 7 |
| MPC powder | 12.3% | 12.3% | 12.3% | 12.3% | 17.6% | 17.6% | 17.6% |
| NaCas powder | 4.9% | 4.9% | 4.9% | 4.9% | | | |
| ECGC powder | | 0.48% | 0.96% | 0.48% | | 0.48% | 0.96% |
| Sodium Azide | 0.02% | 0.02% | 0.02% | 0.02% | 0.02% | 0.02% | 0.02% |
| Water | To 100% | To 100% | To 100% | To 100% | To 100% | To 100% | To 100% |
| One-step mixing | x | x | x | | x | x | X |
| Premix of MPC, water and ECGC prior to NaCas addition | | | | x | | | |
| | | | | | | | |
| **Other characteristics** | | | | | | | |
| Total protein | 15% | 15% | 15% | 15% | 15% | 15% | 15% |
| Catechins: protein weight ratio | 0 | 0.03 | 0.06 | 0.03 | | 0.03 | 0.06 |
| pH (immediate after heat-treatment) | 6.70 | 6.66 | 6.73 | 6.71 | 6.97 | 6.85 | 6.93 |
| **Protein composition relative to total protein** | | | | | | | |
| Micellar casein | 56% | 56% | 56% | 56% | 80% | 80% | 80% |
| Whey protein | 14% | 14% | 14% | 14% | 20% | 20% | 20% |
| Caseinate | 30% | 30% | 30% | 30% | | | |
| | | | | | | | |
| **Results** | | | | | | | |
| Immediate viscosity (cP) | 580 | 790 | 50 | 107 | 73 | 27 | 5 |
| Viscosity after 4 weeks | Gelled | Gelled | 135 | 423 | Gelled | 65 | 6 |

*Analyses*

The pH of the nutritional liquids was measured according to Analysis 6, right before the bottling step, and furthermore measured after 4 weeks of storage under refrigeration.

The viscosity measurements according to Analysis 2 of the nutritional liquids were performed 30 minutes after preparation and furthermore after 4 weeks of storage under refrigeration (5 degrees C).

Results

*pH:*

The immediate pH of the nutritional liquids after heat-treatment were in the range of 6.6-7.0 (see table 7.2) and no substantial changes in the pH were observed after 4 weeks storage.

*Viscosity:*

The results of the viscosity measurements are summarise in Table 7.2.

Sample 1 (the catechin compound-free control) had an immediate viscosity of 580 cP and quickly formed a gel upon storage.

Sample 2 with a catechin compound: protein ratio of 0.03 surprisingly had a higher viscosity (790 cP) than the control and also turned to gel upon refrigeration.

The inventor speculated that the viscosity problems observed in relation to sample 2 might relate to competition for the catechin compounds between the micellar casein and the caseinate. The inventor therefore devised an alternative method for preparing the liquid mixture to see if this could solve the viscosity problems observed in relation to sample 2. In the alternative method the MPC (source of micellar casein), the EGCG powder and water were initially mixed to allow the catechin compounds of the EGCG powder to interact with micellar casein without interference from caseinate. NaCas was added subsequently. The obtained sample (sample 4) had a significantly lower immediate viscosity (only 107 cP) than sample 2, and stayed liquid after 4 weeks storage under refrigeration.

Sample 3 with a catechin compound: protein ratio of 0.06 had a significantly lower viscosity (50 cP) than samples 1 and 2 and stayed liquid during prolonged refrigeration and had a viscosity of 120 cP after 4 weeks. Sample 3 was produced by direct mixing of MPC, caseinate, EGCG powder and water and demonstrates that direct mixing of protein sources with water and catechin compound source can still lead to low viscosities and lack of cold gelling if the content of catechin compounds is sufficiently high relative to total protein.

Samples 5-7, which do not fall within the scope of the claims, were included as caseinate-free references to samples 1-3, and 4 and clearly resulted in much lower immediate viscosities and also less tendency to thickening or gelation during refrigeration.

Conclusion

It was demonstrated that heat-treated, high protein nutritional liquids containing a combination of caseinate, micellar casein and whey protein and at least 10% total protein could easily be produced by using addition of catechin compounds. The development of cold thickening/gelation in these nutritional liquids was significantly reduced or even avoided by addition of catechin compounds. The viscosity of the liquids immediately after heat-treatment was furthermore significantly reduced.

The inventor has furthermore found that the use of caseinates in the nutritional liquids (relative to no use of caseinates) increases the overall viscosity of the nutritional liquids and their tendency to thicken or gel at temperatures below 10 degrees C.

Additionally, the inventor has found that caseinate appears to compete with micellar casein for the catechin compounds and that the micellar casein and catechin compounds advantageously can be mixed in aqueous liquid prior to the addition of caseinate, particularly when a significant amount of caseinate is used in the final nutritional liquid.

The inventor has seen indications that the effects obtained using an EGCG also can be obtained using the structurally related compounds: catechin, epicatechin, gallocatechin, epigallocatechin, catechin 3-gallate, epicatechin 3-gallate; either alone, in combination and/or in combination with EGCG.

**Claims**

1. A nutritional liquid having a pH in the range of 6-8 and comprising:

   - a content of total protein of 10-25% w/w,
   - one or more of catechin, epicatechin, gallocatechin, epigallocatechin, catechin 3-gallate, epicatechin 3-gallate, gallocatechin 3-gallate, and epigallocatechin 3-gallate,
   and wherein the nutritional liquid has a weight ratio between:

    - the sum of the amounts of catechin, epicatechin, gallocatechin, epigallocatechin, catechin 3-gallate, epicatechin 3-gallate, gallocatechin 3-gallate, and epigallocatechin 3-gallate, and
    - total protein

   in the range of 0.001-0.2,
   and wherein the nutritional liquid:

    - comprises micellar casein in an amount of 50% to less than 70% w/w relative to total protein, or
    - comprises:

     - micellar casein in an amount of 50-90% w/w relative to total protein and
     - caseinate in an amount of 1-40% w/w relative to total protein.

2. The nutritional liquid according to claim 1 comprising micellar casein in an amount of 50-69% w/w relative to total protein, even more preferably 51-68% w/w relative to total protein, and most preferably 52-67% w/w.

3. The nutritional liquid according to any of the preceding claims comprising micellar casein and whey protein in a combined amount of at least 85% w/w relative to total protein, more preferably at least 88% w/w, even more preferably at least 90% w/w, and most preferably at least 95% w/w.

4. The nutritional liquid according to any of the preceding claims comprising whey protein in an amount of 20-50% w/w relative to total protein, more preferably 25-45% w/w, even more preferably 30-40% w/w, and most preferably 25-35% w/w.

5. The nutritional liquid according to any of the claims 1-4 comprising:

    - micellar casein in an amount of 50-80% w/w, even more preferably 50-70% w/w, and most preferably 50-75% w/w and
    - caseinate in an amount of 1-30% w/w, even more preferably 1-20% w/w, and most preferably 1-10% w/w.

6. The nutritional liquid according to any of the preceding claims having a weight ratio between:

    - the sum of the amounts of catechin, epicatechin, gallocatechin, epigallocatechin, catechin 3-gallate, epicatechin 3-gallate, gallocatechin 3-gallate, and epigallocatechin 3-gallate, and
    - total protein

    in the range of 0.005-0.2, and more preferably 0.01-0.2.

7. The nutritional liquid according to any of the preceding claims, wherein the total amount of protein is in range of 10-24% w/w, more preferably 10-22% w/w, even more preferably 12-21% w/w and most preferably 14-20% w/w.

8. The nutritional liquid according to any of the preceding claims wherein protein of the nutritional liquid is milk protein.

9. The nutritional liquid according to any of the preceding claims having:

    - an energy content of 1-3 kcal/g, more preferably 1.5-3.0 kcal/g, and even more preferably 2.0-2.8 kcal/g, or
    - an energy content of at most 1 kcal/g, more preferably at most 0.8 kcal/g, and even more preferably at most 0.5 kcal/g.

10. The nutritional liquid according to any of the preceding claims having a pH in the range of 6.0-8.0, more preferably 6.2-7.5, even more preferably 6.4-7.1, and most preferably 6.5-7.0.

11. The nutritional liquid according to any of the preceding claims wherein the nutritional liquid is a heat-treated nutritional liquid, preferably a sterile nutritional liquid, and more preferably a packaged, sterile nutritional liquid.

12. The nutritional liquid according to any of the preceding claims wherein the nutritional liquid is homogenous such that at least the catechin compounds and the milk protein, preferably all ingredients, have been thoroughly mixed and are evenly distributed throughout the nutritional liquid when inspected visually, i.e. by eye.

13. A nutritional powder comprising the solids of the nutritional liquid according to one or more of claims 1-12 and water in an amount of at most 10% w/w, preferably obtainable by drying a nutritional liquid according to one or more of the claims 1-12, e.g. by spray-drying or freeze drying.

14. A method of producing a nutritional liquid comprising the step of:

    a) forming a liquid mixture by combining a polyphenol source comprising one or more of catechin, epicatechin, gallocatechin, epigallocatechin, catechin 3-gallate, epicatechin 3-gallate, gallocatechin 3-gallate, and epigallocatechin 3-gallate, a milk protein source and optionally other ingredients, said liquid mixture comprising

        - a content of total protein of 10-25% w/w, and
        - one or more of catechin, epicatechin, gallocatechin, epigallocatechin, catechin 3-gallate, epicatechin 3-gallate, gallocatechin 3-gallate, and epigallocatechin 3-gallate,

and wherein the liquid mixture has a weight ratio between:

- the sum of the amounts of catechin, epicatechin, gallocatechin, epigallocatechin, catechin 3-gallate, epicatechin 3-gallate, gallocatechin 3-gallate, and epigallocatechin 3-gallate, and
- total protein

in the range of 0.001-0.2, and
wherein the nutritional liquid:

- comprises micellar casein in an amount of 50% to less than 70% w/w relative to total protein, or
- comprises:

- micellar casein in an amount of 50-90% w/w relative to total protein and
- caseinate in an amount of 1-40% w/w relative to total protein.

b) preferably, filling the liquid mixture into a suitable container.

15. The method according to claim 14 wherein the liquid mixture is:

- subjected to heat-treatment, preferably sterilising heat-treatment, prior to filling, and/or
- subjected to heat-treatment, preferably sterilising heat-treatment, after it has been filled into the container.

16. Use of one or more of catechin, epicatechin, gallocatechin, epigallocatechin, catechin 3-gallate, epicatechin 3-gallate, gallocatechin 3-gallate, and epigallocatechin 3-gallate for:

- reducing or preventing cold gelation,
- reducing or preventing cold thickening and/or
- reducing the viscosity, preferably immediately after sterilising heat-treatment
of a nutritional liquid having a pH in the range of 6-8 and comprising protein in an amount of at least 10% w/w, and wherein the nutritional liquid:

- comprises micellar casein in an amount of 50% to less than 70% w/w relative to total protein, or
- comprises:

- micellar casein in an amount of 50-90% w/w relative to total protein and
- caseinate in an amount of 1-40% w/w relative to total protein.

**Patentansprüche**

1. Nährflüssigkeit, die einen pH-Wert im Bereich von 6-8 aufweist und Folgendes umfasst:

- einen Gehalt von Gesamtprotein von 10-25 Gew.-%,
- eines oder mehrere von Catechin, Epicatechin, Gallocatechin, Epigallocatechin, Catechin-3-gallat, Epicatechin-3-gallat, Gallocatechin-3-gallat und Epigallocatechin-3-gallat,
und wobei die Nährflüssigkeit ein Gewichtsverhältnis aufweist zwischen:

- der Summe der Mengen an Catechin, Epicatechin, Gallocatechin, Epigallocatechin, Catechin-3-gallat, Epicatechin-3-gallat, Gallocatechin-3-gallat und Epigallocatechin-3-gallat, und
- Gesamtprotein

im Bereich von 0,001-0,2,
und wobei die Nährflüssigkeit:

- mizellares Kasein in einer Menge von 50 % bis weniger als 70 Gew.-% im Verhältnis zum Gesamtprotein umfasst oder
- Folgendes umfasst:

- mizellares Kasein in einer Menge von 50-90 Gew.-% im Verhältnis zum Gesamtprotein und
- Kaseinat in einer Menge von 1-40 Gew.-% im Verhältnis zum Gesamtprotein.

2. Nährflüssigkeit nach Anspruch 1, die mizellares Kasein in einer Menge von 50-69 Gew.-% im Verhältnis zum Gesamtprotein, noch bevorzugter 51-68 Gew.-% im Verhältnis zum Gesamtprotein und besonders bevorzugt 52-67 Gew.-%, umfasst.

3. Nährflüssigkeit nach einem der vorstehenden Ansprüche, die mizellares Kasein und Molkenprotein in einer Gesamtmenge von mindestens 85 Gew.-% im Verhältnis zum Gesamtprotein, bevorzugter mindestens 88 Gew.-%, noch bevorzugter mindestens 90 Gew.-% und besonders bevorzugt mindestens 95 Gew.-%, umfasst.

4. Nährflüssigkeit nach einem der vorstehenden Ansprüche, die Molkenprotein in einer Menge von 20-50 Gew.-% im Verhältnis zum Gesamtprotein, bevorzugter 25-45 Gew.-%, noch bevorzugter 30-40 Gew.-% und besonders bevorzugt 25-35 Gew.-%, umfasst.

5. Nährflüssigkeit nach einem der Ansprüche 1-4, umfassend:

- mizellares Kasein in einer Menge von 50-80 Gew.-%, noch bevorzugter 50-70 Gew.-% und besonders bevorzugt 50-75 Gew.-% und
- Caseinat in einer Menge von 1-30 Gew.-%, noch bevorzugter 1-20 Gew.-% und besonders bevorzugt 1-10 Gew.-%.

6. Nährflüssigkeit nach einem der vorstehenden Ansprüche, die ein Gewichtsverhältnis aufweist zwischen:

- der Summe der Mengen an Catechin, Epicatechin, Gallocatechin, Epigallocatechin, Catechin-3-gallat, Epicatechin-3-gallat, Gallocatechin-3-gallat und Epigallocatechin-3-gallat, und
- Gesamtprotein

im Bereich von 0,005-0,2 und bevorzugter 0,01-0,2.

7. Nährflüssigkeit nach einem der vorstehenden Ansprüche, wobei der Gesamtproteingehalt in einem Bereich von 10-24 Gew.-%, bevorzugter 10-22 Gew.-%, noch bevorzugter 12-21 Gew.-% und besonders bevorzugt 14-20 Gew.-% liegt.

8. Nährflüssigkeit nach einem der vorstehenden Ansprüche, wobei das Protein der Nährflüssigkeit Milchprotein ist.

9. Nährflüssigkeit nach einem der vorstehenden Ansprüche, die Folgendes aufweist:

- einen Energiegehalt von 1-3 kcal/g, bevorzugter 1,5-3,0 kcal/g, und noch bevorzugter 2,0-2,8. kcal/g, oder
- einen Energiegehalt von höchstens 1 kcal/g, bevorzugter höchstens 0,8 kcal/g, und noch bevorzugter höchstens 0,5 kcal/g.

10. Nährflüssigkeit nach einem der vorstehenden Ansprüche, die einen pH-Wert im Bereich von 6,0 bis 8,0, besonders bevorzugt 6,2 bis 7,5, noch bevorzugter 6,4 bis 7,1 und besonders bevorzugt 6,5 bis 7,0, aufweist.

11. Nährflüssigkeit nach einem der vorstehenden Ansprüche, wobei die Nährflüssigkeit eine wärmebehandelte Nährflüssigkeit, vorzugsweise eine sterile Nährflüssigkeit und bevorzugter eine verpackte, sterile Nährflüssigkeit ist.

12. Nährflüssigkeit nach einem der vorstehenden Ansprüche, wobei die Nährflüssigkeit homogen ist, sodass zumindest die Catechinverbindungen und das Milchprotein, vorzugsweise alle Zutaten, gründlich vermischt worden sind und, wenn sie visuell, d. h. mit dem Auge, geprüft werden, gleichmäßig in der gesamten Nährflüssigkeit verteilt sind.

13. Nährpulver, umfassend die Feststoffe der Nährflüssigkeit nach einem oder mehreren der Ansprüche 1-12 und Wasser in einer Menge von höchstens 10 Gew.-%, vorzugsweise erhältlich durch Trocknen einer Nährflüssigkeit nach einem oder mehreren der Ansprüche 1-12, z. B. durch Sprühtrocknen oder Gefriertrocknen.

14. Verfahren zum Herstellen einer Nährflüssigkeit, das den folgenden Schritt umfasst:

a) Bilden eines Flüssigkeitsgemischs durch Kombinieren einer Polyphenolquelle, die eines oder mehrere von Catechin, Epicatechin, Gallocatechin, Epigallocatechin, Catechin-3-gallat, Epicatechin-3-gallat, Gallocatechin-3-gallat und Epigallocatechin-3-gallat umfasst, einer Milchproteinquelle und gegebenenfalls anderer Inhaltsstoffe, wobei das Flüssigkeitsgemisch Folgendes umfasst:

- einen Gehalt von Gesamtprotein von 10-25 Gew.-%,
und
- eines oder mehrere von Catechin, Epicatechin, Gallocatechin, Epigallocatechin, Catechin-3-gallat, Epicatechin-3-gallat, Gallocatechin-3-gallat und Epigallocatechin-3-gallat,
und wobei das Flüssigkeitsgemisch ein Gewichtsverhältnis aufweist zwischen:

- der Summe der Mengen an Catechin, Epicatechin, Gallocatechin, Epigallocatechin, Catechin-3-gallat, Epicatechin-3-gallat, Gallocatechin-3-gallat und Epigallocatechin-3-gallat, und
- Gesamtprotein

im Bereich von 0,001 bis 0,2 und
wobei die Nährflüssigkeit:

- mizellares Kasein in einer Menge von 50 % bis weniger als 70 Gew.-% im Verhältnis zum Gesamtprotein umfasst oder
- Folgendes umfasst:

- mizellares Kasein in einer Menge von 50-90 Gew.-% im Verhältnis zum Gesamtprotein und
- Caseinat in einer Menge von 1-40 Gew.-% im Verhältnis zum Gesamtprotein.

b) vorzugsweise Abfüllen des Flüssigkeitsgemischs in einen geeigneten Behälter.

**15.** Verfahren nach Anspruch 14, wobei das Flüssigkeitsgemisch Folgendes wird:

- vor dem Abfüllen einer Wärmebehandlung, vorzugsweise einer Sterilisationswärmebehandlung, unterzogen und/oder
- nachdem es in den Behälter abgefüllt worden ist, einer Wärmebehandlung, vorzugsweise einer Sterilisationswärmebehandlung, unterzogen.

**16.** Verwendung eines oder mehrerer von Catechin, Epicatechin, Gallocatechin, Epigallocatechin, Catechin-3-gallat, Epicatechin-3-gallat, Gallocatechin-3-gallat und Epigallocatechin-3-gallat zum:

- Verringern oder Verhindern von Kaltgelierung,
- Verringern oder Verhindern von Kaltverdickung und/oder
- Verringern der Viskosität, vorzugsweise unmittelbar nach der Sterilisationswärmebehandlung
einer Nährflüssigkeit, die einen pH-Wert im Bereich von 6-8 aufweist und einen Proteingehalt von mindestens 10 Gew.-% umfasst, und
wobei die Nährflüssigkeit:

- mizellares Kasein in einer Menge von 50 % bis weniger als 70 Gew.-% im Verhältnis zum Gesamtprotein umfasst oder
- Folgendes umfasst:

- mizellares Kasein in einer Menge von 50-90 Gew.-% im Verhältnis zum Gesamtprotein und
- Caseinat in einer Menge von 1-40 Gew.-% im Verhältnis zum Gesamtprotein.

**Revendications**

**1.** Liquide nutritionnel présentant un pH dans la plage de 6 à 8 et comprenant :

- une teneur en protéines totales de 10 à 25 % p/p,
- une ou plusieurs parmi la catéchine, l'épicatéchine, la gallocatéchine, l'épigallocatéchine, la catéchine 3-gallate, l'épicatéchine 3-gallate, la gallocatéchine 3-gallate et l'épigallocatéchine 3-gallate,
et dans lequel le liquide nutritionnel présente un rapport pondéral entre :

- la somme des quantités de catéchine, d'épicatéchine, de gallocatéchine, d'épigallocatéchine, de catéchine 3-gallate, d'épicatéchine 3-gallate, de gallocatéchine 3-gallate et d'épigallocatéchine 3-gallate, et
- les protéines totales

dans la plage de 0,001 à 0,2,
et dans lequel le liquide nutritionnel :

- comprend de la caséine micellaire en une quantité de 50 % à moins de 70 % p/p par rapport aux protéines totales, ou
- comprend :

- de la caséine micellaire en une quantité de 50 à 90 % p/p par rapport aux protéines totales et
- de la caséinate en une quantité de 1 à 40 % p/p par rapport aux protéines totales.

**2.** Liquide nutritionnel selon la revendication 1 comprenant de la caséine micellaire en une quantité de 50 à 69 % p/p par rapport aux protéines totales, plus préférentiellement de 51 à 68 % p/p par rapport aux protéines totales, et le plus préférentiellement de 52 à 67 % p/p.

**3.** Liquide nutritionnel selon l'une quelconque des revendications précédentes, comprenant de la caséine micellaire et des protéines de lactosérum en une quantité combinée d'au moins 85 % p/p par rapport aux protéines totales, plus préférentiellement d'au moins 88 % p/p, encore plus préférentiellement d'au moins 90 % p/p, et le plus préférentiellement d'au moins 95 % p/p.

**4.** Liquide nutritionnel selon l'une quelconque des revendications précédentes, comprenant des protéines de lactosérum en une quantité de 20 à 50 % p/p par rapport aux protéines totales, plus préférentiellement de 25 à 45 % p/p, encore plus préférentiellement de 30 à 40 % p/p, et le plus préférentiellement de 25 à 35 % p/p.

**5.** Liquide nutritionnel selon l'une quelconque des revendications 1 à 4, comprenant :

- de la caséine micellaire en une quantité de 50 à 80 % p/p, plus préférentiellement de 50 à 70 % p/p, et le plus préférentiellement de 50 à 75 % p/p et
- de la caséinate en une quantité de 1 à 30 % p/p, plus préférentiellement de 1 à 20 % p/p, et le plus préférentiellement de 1 à 10 % p/p.

**6.** Liquide nutritionnel selon l'une quelconque des revendications précédentes, présentant un rapport pondéral entre :

- la somme des quantités de catéchine, d'épicatéchine, de gallocatéchine, d'épigallocatéchine, de catéchine 3-gallate, d'épicatéchine 3-gallate, de gallocatéchine 3-gallate et d'épigallocatéchine 3-gallate, et
- les protéines totales

dans la plage de 0,005 à 0,2, et plus préférentiellement de 0,01 à 0,2.

**7.** Liquide nutritionnel selon l'une quelconque des revendications précédentes, dans lequel la quantité totale de protéines est dans la plage de 10 à 24 % p/p, plus préférentiellement de 10 à 22 % p/p, encore plus préférentiellement de 12 à 21 % p/p et le plus préférentiellement de 14 à 20 % p/p.

**8.** Liquide nutritionnel selon l'une quelconque des revendications précédentes, dans lequel les protéines du liquide nutritionnel sont des protéines de lait.

**9.** Liquide nutritionnel selon l'une quelconque des revendications précédentes présentant :

- un contenu énergétique de 1 à 3 kcal/g, plus préférentiellement de 1,5 à 3,0 kcal/g, et encore plus préférentiellement de 2,0 à 2,8 kcal/g, ou
- un contenu énergétique d'au plus 1 kcal/g, plus préférentiellement d'au plus 0,8 kcal/g, et encore plus préférentiellement d'au plus 0,5 kcal/g.

**10.** Liquide nutritionnel selon l'une quelconque des revendications précédentes, présentant un pH dans la plage de 6,0 à 8,0, plus préférentiellement de 6,2 à 7,5, encore plus préférentiellement de 6,4 à 7,1, et le plus préférentiellement de 6,5 à 7,0.

**11.** Liquide nutritionnel selon l'une quelconque des revendications précédentes, dans lequel le liquide nutritionnel est un liquide nutritionnel traité thermiquement, de préférence un liquide nutritionnel stérile, et plus préférentiellement un liquide nutritionnel stérile conditionné.

**12.** Liquide nutritionnel selon l'une quelconque des revendications précédentes, dans lequel le liquide nutritionnel est homogène de sorte qu'au moins les composés de catéchine et les protéines de lait, de préférence tous les ingrédients, aient été soigneusement mélangés et soient répartis uniformément dans le liquide nutritionnel lorsqu'on l'observe visuellement, c'est-à-dire à l'œil nu.

**13.** Poudre nutritionnelle comprenant les matières solides du liquide nutritionnel selon une ou plusieurs des revendications 1-12 et de l'eau en une quantité d'au plus 10 % p/p, de préférence pouvant être obtenue par séchage d'un liquide nutritionnel selon une ou plusieurs des revendications 1-12, par exemple par séchage par pulvérisation ou par lyophilisation.

**14.** Procédé de production d'un liquide nutritionnel comprenant les étapes suivantes :

a) la formation d'un mélange liquide en combinant une source de polyphénol comprenant une ou plusieurs parmi la catéchine, l'épicatéchine, la gallocatéchine, l'épigallocatéchine, la catéchine 3-gallate, l'épi-catéchine 3-gallate, la gallocatéchine 3-gallate et l'épigallocatéchine 3-gallate, une source de protéines de lait et facultativement d'autres ingrédients, ledit mélange liquide comprenant

- une teneur en protéines totales de 10 à 25 % p/p,
et
- une ou plusieurs parmi la catéchine, l'épicatéchine, la gallocatéchine, l'épigallocatéchine, la catéchine 3-gallate, l'épicatéchine 3-gallate, la gallocatéchine 3-gallate et l'épigallocatéchine 3-gallate,
et dans lequel le mélange liquide présente un rapport pondéral entre :

- la somme des quantités de catéchine, d'épicatéchine, de gallocatéchine, d'épigallocatéchine, de catéchine 3-gallate, d'épicatéchine 3-gallate, de gallocatéchine 3-gallate et d'épigallocatéchine 3-gallate, et
- les protéines totales

dans la plage de 0,001 à 0,2, et
dans lequel le liquide nutritionnel :

- comprend de la caséine micellaire en une quantité de 50 % à moins de 70 % p/p par rapport aux protéines totales, ou
- comprend :

- de la caséine micellaire en une quantité de 50 à 90 % p/p par rapport aux protéines totales et
- de la caséinate en une quantité de 1 à 40 % p/p par rapport aux protéines totales.

b) de préférence, l'introduction du mélange liquide dans un récipient approprié.

**15.** Procédé selon la revendication 14, dans lequel le mélange liquide est :

- soumis à un traitement thermique, de préférence un traitement thermique stérilisant, avant l'introduction, et/ou
- soumis à un traitement thermique, de préférence un traitement thermique stérilisant, après avoir été introduit dans le récipient.

**16.** Utilisation d'une ou plusieurs parmi la catéchine, l'épicatéchine, la gallocatéchine, l'épigallocatéchine, la catéchine 3-gallate, l'épicatéchine 3-gallate, la gallocatéchine 3-gallate et l'épigallocatéchine 3-gallate, pour :

- réduire ou empêcher la gélification à froid,

- réduire ou empêcher l'épaississement à froid et/ou
- réduire la viscosité, de préférence immédiatement après le traitement thermique stérilisant

d'un liquide nutritionnel présentant un pH dans la plage de 6 à 8 et comprenant des protéines en une quantité d'au moins 10 % p/p, et

dans lequel le liquide nutritionnel :

- comprend de la caséine micellaire en une quantité de 50 % à moins de 70 % p/p par rapport aux protéines totales, ou
- comprend :

- de la caséine micellaire en une quantité de 50 à 90 % p/p par rapport aux protéines totales et
- de la caséinate en une quantité de 1 à 40 % p/p par rapport aux protéines totales.

# Fig. 1

(A)

(B)

(C)

(D)

# Fig. 2

11% MCI

Legend:
- Control (ratio: 0.00)
- Ratio: 0.06
- Ratio: 0.10

Fig. 3

12% MCI

Fig. 4

13% MCl

−×− Ratio: 0.01

−∗− Ratio: 0.03

# Fig. 5

## 11% MCI

Control (ratio: 0.00)

Ratio: 0.06

Ratio: 0.10

# Fig. 6

## 12% MCI

Legend:
- Control (ratio: 0.00)
- Ratio: 0.06
- Ratio: 0.10

# Fig. 7

## 13% MCI

⊞ Ratio: 0.01

⊟ Ratio: 0.03

Fig. 8

143C
110C
125C
no heat PP
control

Viscosity control cP

160
140
120
100
80
60
40
20
0

700
600
500
400
300
200
100
0

shear rate (1/s)

30
25
20
15
10
5
0

viscosity cP

# Fig. 9

viscosity at 145 s-1

# Fig. 10

## Fig. 11

## Fig. 12

## Fig. 13

## Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5683984 A
- WO 2013129912 A1
- WO 2011112075 A1
- US 2011008485 A1
- WO 2015059243 A
- WO 2015059248 A1
- WO 2007110411 A2
- WO 2021136785 A1
- WO 2018115520 A

**Non-patent literature cited in the description**

- **O'CONNELL et al.** Effects of phenolic compounds on the heat stability of milk and concentrated milk. *Journal of Dairy Research*, 01 January 1999, vol. 66, 399-407
- **BOBE et al.** Separation and Quantification of Bovine Milk Proteins by Reversed-Phase High-Performance Liquid Chromatography. *J. Agric. Food Chem.*, 1998, vol. 46, 458-463
- **FERRUZZI et al.** Analysis of catechins from milk-tea beverages by enzyme assisted extraction followed by high performance liquid chromatography. *Food Chemistry*, 2006, vol. 99 (3), 484-491
- **CHÁVEZ-SERVÍN et al.** Total phenolic compounds in milk from different species. Design of an extraction technique for quantification using the Folin-Ciocalteu method. *Small Ruminant Research*, 2018, vol. 160, 54-58